# EUROPEAN PATENT SPECIFICATION

(11) **EP 4 227 841 B1**
(45) Date of publication and mention of the grant of the patent: **16.09.2026**
(21) Application number: 23156575.5
(22) Date of filing: 14.02.2023
(51) Int. Cl.: G06F 21/62, G06F 16/22, H04L 9/06, H04L 9/40, H04W 12/02

(54) **SYSTEMS AND METHODS FOR TRACKING PROPAGATION OF SENSITIVE DATA**
SYSTEME UND VERFAHREN ZUR VERFOLGUNG DER AUSBREITUNG VON EMPFINDLICHEN DATEN
SYSTÈMES ET PROCÉDÉS DE SUIVI DE PROPAGATION DE DONNÉES SENSIBLES

(30) Priority: 15.02.2022 US 202263268018 P
(43) Date of publication of application: 16.08.2023
(73) Proprietor: QOHASH INC., Québec, QC G1K 3L7 (CA)
(72) Inventor: LE BOUTHILLIER, Jean, Québec, G1K 0G5 (CA); PERICO, Luca, Québec, G1W 3H6 (CA)
(74) Representative: Murgitroyd & Company

(56) References cited:
- EP-A2- 2 879 069
- US-A1- 2018 082 082
- US-A1- 2018 219 836

## Description

### TECHNICAL FIELD

The technical field generally relates to managing sensitive data in computer systems, and more specifically to systems and methods for detecting, extracting, securely storing, and tracking the propagation of such sensitive data.

### BACKGROUND

Organizations are facing a rapid increase in data volume, velocity, and value, making data security more important than ever. Different tools exist to help organizations increase their visibility and control over their data, such as tools that find sensitive data and track the way it is being shared inside an organization.

Unfortunately, existing tools are limited to tracking entire files that are shared within an organization, and are unable to track the propagation of individual pieces of sensitive data contained within those files. Moreover, user interfaces in existing tools are lacking in their ability to facilitate an at-a-glance understanding of how sensitive data is propagated within an organization.

US 2018/0219836 A1 describes a system for obfuscating personally identifiable information in database records in order to share the data between different entities, making it possible to extrapolate insight from the data. It teaches a personal information gateway that analyzes data about to be transmitted with respect to policy rules. The system operates on databases including fields that are known to be associated with personally identifiable information and fields that are known not to be. The system shreds fields including with personally identifiable information and optionally hashes them.

US 2018/0082082 A1 describes a system to anonymize of data sets. It teaches an anonymization process including the deidentification of personally identifiable information from a data set, i.e., the removal of the information, and the hashing of the set identifier. Therefore, to comply with stringent privacy and security requirements, the system produces anonymized data that do not contain personally identifiable information in any form.

### SUMMARY

The invention is defined in the independent claims.

According to an aspect, there is provided a method for tracking propagation of sensitive data. The method includes: detecting via a plurality of sensors deployed to a plurality of devices, sensitive data within data assets accessible via the plurality of devices; extracting, via the plurality of sensors, the sensitive data from the data assets, and hashing the sensitive data using a first salt to produce first hashes; transmitting data detection event information including at least the first hashes from the plurality of sensors to a backend server; receiving the data detection event information at the backend server; hashing the first hashes at the backend server using a second salt to produce second hashes; and storing the second hashes in storage accessible via the backend server, each of the second hashes corresponding to a detection event and being stored in association with properties including at least: a timestamp corresponding to when the sensitive data was detected, and an identifier of a data asset from which the sensitive data was extracted.

In some embodiments, the method further includes gathering, via the plurality of sensors, file metadata, host metadata and/or match metadata, wherein the data detection event information further includes the gathered file metadata, host metadata and/or match metadata.

In some embodiments, the data detection event information is encrypted, using a public key of a first asymmetric key pair including a private key and the public key, before being transmitted to the backend server.

In some embodiments, the method further includes, after receiving the first hashes at the backend server: gathering, via the backend server, server-level properties including: enhanced match information associated with extracted sensitive data and the data asset from which the sensitive data was extracted; and/or a risk profile corresponding to a level of risk associated with the detection event; and storing the server-level properties in association with the detection events in the storage.

In some embodiments, the tracking is implemented for a plurality of customers, each of the plurality of sensors being associated with one customer of the plurality of customers, wherein hashing the sensitive data further includes obtaining a first salt specific to the one customer.

In some embodiments, the first salt is stored in a customer key vault accessible by the plurality of sensors, wherein hashing the first hashes at the backend server further includes querying the customer key vault to obtain the first salt.

In some embodiments, the second salt is stored in a service-provider key vault accessible via the backend server, wherein hashing the first hashes at the backend server further includes querying the service-provider key vault to obtain the second salt.

In some embodiments, the method further includes receiving, at the backend server, a search request corresponding to a specific sensitive data value, and in response thereto: responsive to the search request not including a first search hash, hashing the specific sensitive data value using the first salt to produce the first search hash; hashing the first search hash using the second salt to produce a second search hash; and searching for second hashes in the storage matching the second search hash.

In some embodiments, the method further includes causing a display device to display, for a specified type of sensitive data, a plurality of elements, wherein each element includes: one sensitive data of the specified type that was detected within at least one data asset accessible via at least one of the plurality of devices; and a number of distinct devices and/or individuals having access to at least one of the data assets where the sensitive data was detected, and/or a number of distinct files where the sensitive data was detected.

In some embodiments, the method further includes causing the display device to display: on a first axis, a plurality of individuals; on a second axis, a plurality of timestamps; and at least one set of aggregated information relative to detection events, each displayed on the second axis next to the individual who triggered the detection event and on the first axis next to the one or more timestamps representing the moments when the detection events occurred.

In some embodiments, displaying each set of aggregated information includes displaying: a number of sensitive data that was detected within data assets accessible via a device corresponding to the individual who triggered the detection event; a number of files in which the sensitive data was detected within data assets accessible via a device corresponding to the individual who triggered the detection event; and/or a duration for which the sensitive data was detected within data assets accessible via a device corresponding to the individual who triggered the detection event.

In some embodiments, the method further includes causing the display device to display, for a specified individual: a list of the sensitive data that was detected within data assets accessible via a device corresponding to the specified individual; and/or a list of files in which the sensitive data was detected within data assets accessible via a device corresponding to the specified individual.

In some embodiments, the method further includes encrypting the sensitive data using a public key of a second asymmetric key pair including a private key and the public key, to produce cryptograms, the detection event information further including the cryptograms.

In some embodiments, the method further includes: transmitting, via a consultation device, cryptograms received from the backend server to a customer decryption module; decrypting, via the customer decryption module, cryptograms received from the consultation device using the private key of the second asymmetric key pair; transmitting the decrypted cryptograms from the customer decryption module to the consultation device; and displaying the decrypted cryptograms via the consultation device.

According to another aspect, there is provided a non-transitory computer-readable medium having instructions stored thereon which, when executed by at least one processor, cause the at least one processor to carry out an embodiment of the method described above.

According to a further aspect, there is provided a non-transitory computer-readable medium for tracking propagation of sensitive data having instructions stored thereon which, when executed by at least one processor of a device, cause the at least one processor to carry out a method. The method includes the steps of: detecting sensitive data within data assets accessible via the device; extracting the sensitive data from the data assets, and hashing the sensitive data using a first salt to produce first hashes; transmitting the first hashes to a backend server for re-hashing using a second salt to produce second hashes and storage on storage associated with the backend server, each of the second hashes corresponding to a detection event and being stored in association with properties including a timestamp corresponding to when the sensitive data was detected and a source of the data asset from which the sensitive data was extracted.

According to yet another aspect, there is provided a system for tracking propagation of sensitive data. The system includes: a plurality of endpoint devices, each endpoint device having a sensor deployed thereto, the sensor being preconfigured with a first salt, the sensor including: a surveillance module configured to detect and extract sensitive data from data assets accessible via the endpoint device, a hashing module configured to hash the extracted sensitive data using the first salt to produce first hashes, and a communication module configured to transmit detection event information, each instance of detection event information corresponding to an instance of sensitive data being detected and including at least the first hashes; and a backend server including: a communication module configured to receive the detection event information from the plurality of endpoint devices, a hashing module configured to hash the first hashes using a second salt to produce second hashes, and a storage module configured to store the detection event information on storage associated with the backend server for later access.

In some embodiments, the tracking is implemented for a plurality of customers, each sensor being associated with one of the plurality of customers, wherein the hashing module is further configured to obtain a first salt specific to the one customer.

In some embodiments, the sensor further includes a property gathering module configured to gather one or more metadata selected from the list including: file metadata, host metadata, and match metadata; wherein the detection event information further includes the one or more metadata.

In some embodiments, the backend server further includes a property gathering module configured to gather at least one server-level property following receipt of detection events, the at least one server-level property including at least one of: enhanced match information associated with extracted sensitive data and the data asset from which the sensitive data was extracted, and a risk profile corresponding to a level of risk associated with the detection event; wherein the storage module is further configured to store the at least one server-level property associated with the detection events.

In some embodiments, the sensor communication module is configured to encrypt detection event information for transmission using a first key of a first asymmetric key pair, the backend server further including a decryption module configured to decrypt the encrypted detection event information using a second key of the first asymmetric key pair.

In some embodiments, the second salt is stored in a secure vault accessible via the backend server and the secure vault is queried at runtime by the backend server hashing module to receive the second salt.

In some embodiments, the backend server further includes a search module configured to query the storage for detection events matching one or more search criteria, wherein the search criteria includes a search string corresponding to sensitive data, further wherein the search module is configured to hash the search string using the first salt to produce a first search hash, hash the first search hash using the second salt to product a second search hash, and return stored detection events having second hashes matching the second search hash.

In some embodiments, the system further includes a consulting device having a display configured to display, for a specified type of sensitive data, a plurality of elements, wherein each element includes: one sensitive data of the specified type that was detected within at least one data asset accessible via at least one of the plurality of devices; and at least one of: a quantity of devices having access to at least one of the data assets where the sensitive data was detected, and a quantify of files where the sensitive data was detected.

In some embodiments, the sensor further includes a data encryption module configured to encrypt the sensitive data using a first key of a second asymmetric key pair to produce cryptograms, the detection event information further including the cryptograms.

In some embodiments, the system further includes a customer decryption module configured to: decrypt cryptograms received from the consulting device using a second key of the second asymmetric key pair; and transmit back the decrypted cryptograms to the consulting device; wherein the consulting device is configured to: transmit cryptograms received from the backend server to the customer decryption module; and output the decrypted cryptograms received from the customer decryption module on the display.

According to yet a further aspect, there is provided a system for tracking propagation of sensitive data associated with one of a plurality of customers. The system can include: a plurality of customer endpoint devices, each customer endpoint device having a sensor deployed thereto, the sensor being preconfigured with a first salt associated with a given one of the plurality of customers, the sensor including: a surveillance module configured to detect and extract sensitive data from data assets accessible via the customer endpoint device, wherein detecting and extracting sensitive data from a data asset includes identifying a portion of text within the data asset matching a predefined pattern and extracting the matched portion; a hashing module configured to hash the extracted sensitive data using the first salt to produce a first hash; a data encryption module configured to encrypt the sensitive data using a first key of a first asymmetric key pair to produce a cryptogram; a property gathering module configured to gather a plurality of sensor-level properties following the detection and extraction of the sensitive data, the plurality of sensor-level properties including: file information associated with the data asset from which the sensitive data was extracted; host information associated with the customer endpoint device from which the sensitive data was detected; and match information associated with the extracted sensitive data, said match information including the first hash and the cryptogram; a communication module configured to encrypt and transmit detection event information, each instance of detection event information corresponding to an instance of sensitive data being detected and including the plurality of sensor-level properties gathered following the detection and extraction of the instance of sensitive data, the communication module being configured to encrypt the detection events by encrypting at least the match information using a public key of a second asymmetric key pair; a backend server including: a communication module configured to receive the encrypted detection event information from the plurality of endpoint devices; a decryption module configured to decrypt the encrypted detection event information, including the encrypted match information, using a private key of the second asymmetric key pair; a hashing module configured to hash the first hash using a second salt to produce a second hash, wherein the second salt is stored in a secure vault accessible via the backend server and the secure vault is queried at runtime by the hashing module to receive the second salt; a property gathering module configured to gather a plurality of server-level properties following receipt of detection events, the plurality of server-level properties including: enhanced match information associated with extracted sensitive data and the data asset from which the sensitive data was extracted; and a risk profile corresponding to a level of risk associated with the detection event; a storage module configured to store the detection events in persistent storage associated with the backend server for later access, each detection event stored via the storage module including the plurality of server-level properties and the plurality of sensor-level properties with the second hash in place of the first hash; a search module configured to query the persistent storage for detection events matching one or more search criteria, wherein the search criteria includes a search string corresponding to sensitive data, further wherein the search module is configured to hash the search string using the first salt to produce a first search hash, hash the first search hash using the second salt to produce a second search hash, and return stored detection events having a second hash matching the second search hash; a consulting device having a display and being configured to: transmit search criteria to the backend server; receive detection events from the backend server corresponding to the search criteria; and display the detection events on the display, wherein the detection events are displayed on a timeline indicating, for a plurality of users, periods of time during which each of the plurality of users had access to sensitive data meeting the search criteria.

### BRIEF DESCRIPTION OF THE DRAWINGS

Figures 1A and 1B are block diagrams illustrating a system for tracking propagation of sensitive data associated with one of a plurality of customers, according to an embodiment.
Figure 2 is a class diagram illustrating an exemplary database structure for storing sensitive data detection information, according to an embodiment.
Figure 3 is a schematic illustrating an exemplary method for securely collecting sensitive data and comparing fingerprints thereof, according to an embodiment.
Figures 4A and 4B are flowcharts of an exemplary method for detecting sensitive data and for processing, transmitting and storing sensitive data detection information, according to an embodiment.
Figure 5 is a flowchart of an exemplary method for searching and analyzing sensitive data detection information, according to an embodiment.
Figure 6 is an exemplary graphical user interface showing aggregated information about sensitive data detection events across devices in a customer environment, according to an embodiment.
Figure 7A is an exemplary graphical user interface showing information about sensitive data propagation in a customer environment, according to an embodiment.
Figure 7B is an exemplary graphical user interface showing information about sensitive data detected in the device(s) of a specific individual, according to an embodiment.

### DETAILED DESCRIPTION

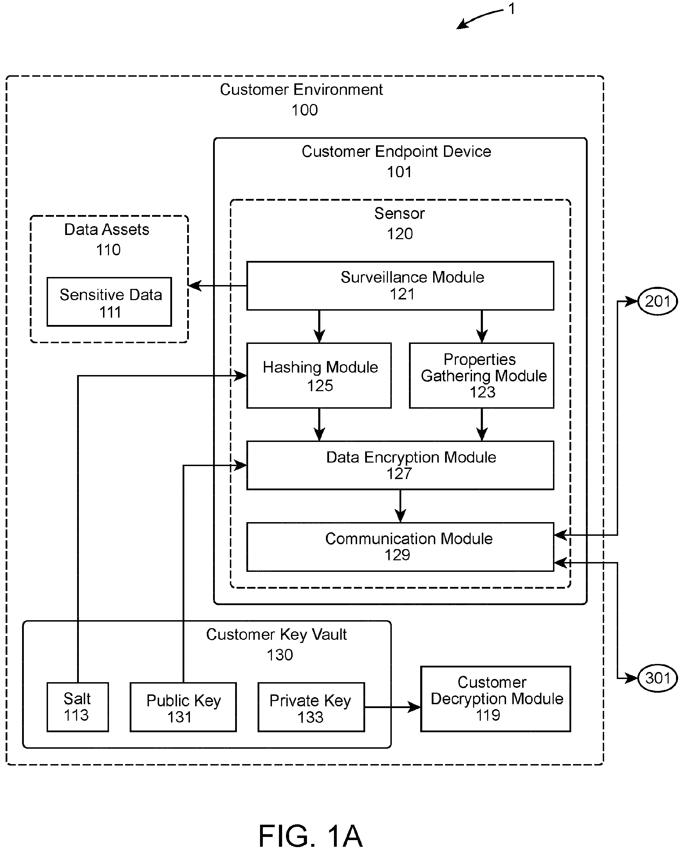

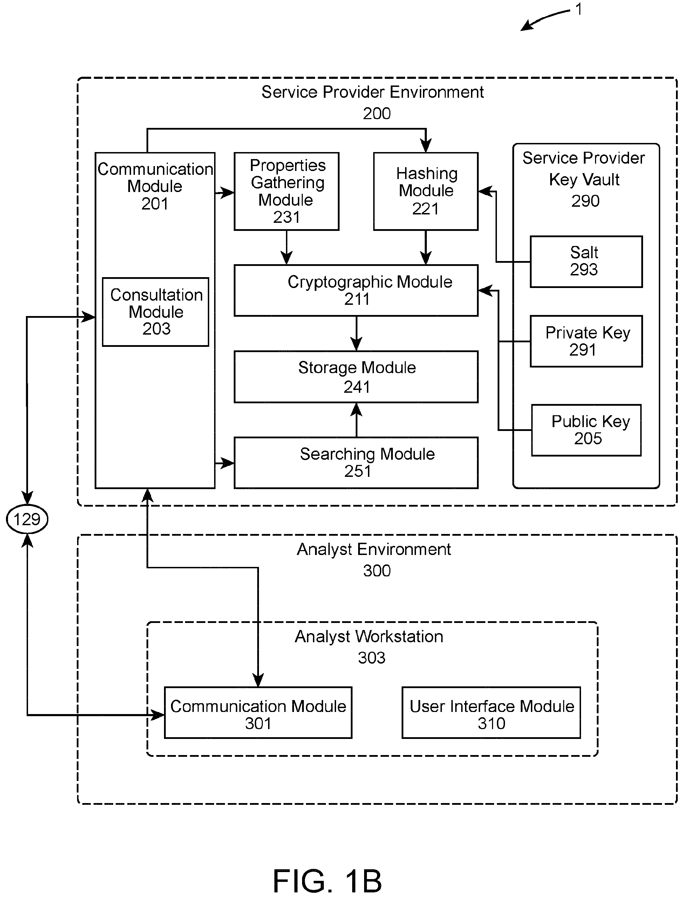

With reference to Figures 1A and 1B, an exemplary system 1 for tracking propagation of sensitive data is shown according to an embodiment. Broadly described, the system 1 is configured to monitor sources of data within a customer environment 100 for the presence of sensitive data. When such sensitive data is detected on a data source, the data is collected, hashed, encrypted and forwarded to a service provider environment 200 for hashing and storage. Various sensor-level properties, including properties related to the sensitive data, the file in which it is contained, and the device where it was detected can be extracted, encrypted and forwarded to the service provider environment 200, where supplementation with server-level properties and storage can occur. In the illustrated system 1, detection event information, including the collected data and properties, can later be searched and accessed from an analyst environment 300, for example to allow a security analyst to review how sensitive data is being propagated within the customer environment 100. It is appreciated, however, that this is for exemplary purposes only and that in other embodiments, the data can be retrieved for display and/or consumption by an authorized party for other purposes. Accordingly, the analyst environment 300 can also be more generally referred to as a consumption or consulting environment. As will be discussed in more detail hereinafter, the system 1 is configured to allow sensitive data to be displayed and/or consumed while maintaining strict data privacy controls.

In the following description, the customer environment 100 refers to a secured information technology (IT) environment that includes technological components controlled by a customer. Such components can include hardware and software to implement the client's IT infrastructure, such as workstations, servers, storage, networking equipment, etc. Such equipment can communicate via a single physical or virtual network, or multiple networks controlled by the client. The equipment can be located on the customer's premises, and/or can be distributed. For example, the customer environment 100 can include computing components, such as workstations, that employees can use for remote work. As another example, customer environment 100 can include hardware and/or software provided as a service to the customer, such as cloud computing solutions, cloud storage solutions, and/or other cloud services. Although a single customer environment 100 is illustrated, it will be appreciated that the system 1 can be configured to track propagation of sensitive data in a plurality of customer environments controlled by a plurality of different customers.

The service provider environment 200 and analyst environment 300 refer to similar IT environments that are respectively controlled by an organization providing data security services and by an analyst, instead of by the customer. As can be appreciated, the service provider environment 200 can include hardware and/or software components that are on different physical or logical premises than hardware and/or software components of analyst environment 300 and/or of customer environment 100. As an example, the service provider environment 200 can include a backend server implementing functionalities such as those that will be described in various modules hereafter. Although the term backend server will be used, it is appreciated that the backend server can correspond to a plurality of servers, each of which implements all or a subset of the functionalities of the backend server, and/or which share the processing load among themselves. The analyst environment 300 can include hardware and/or software for interacting with the service provider environment 200 and/or customer environment 100. As an example, the analyst environment 300 can include an IT device, such as a workstation, equipped with a web browser configured to communicate and interoperate with service provider environment 200 and/or customer environment 100 through HTTP, HTTPS or other secure protocols.

In the foregoing description, various modules of the customer environment 100, service provider environment 200 and analyst environment 300 will be described. As can be appreciated, such modules can be implemented as part of one or more of the above-described hardware and/or software components within such environments 100, 200 and 300. In some embodiments, the modules can be provided as part of one or more non-transitory computer-readable media containing instructions, which executed, cause a computing hardware component to implement the functionality of the modules.

As can be appreciated, the customer environment 100 can include many different sources of data that may need to be monitored for sensitive data. Such sources of data can include, for example, storage on employee workstations, servers, and cloud services or resources, among others. At least some of the data sources can be monitored from a customer endpoint device 101. In the present embodiment, the customer endpoint device 101 corresponds to an employee workstation, but it is appreciated that the endpoint device can correspond to other devices within the customer environment 100, such as a server. The customer endpoint device 101 can be located on the customer's premises or can be at an employee's home while working remotely and connected to the customer's IT environment for instance via a Virtual Private Network (VPN). Although a single endpoint device 101 is illustrated, it will be appreciated that the customer environment 100 can include a plurality of endpoint devices that can be monitored for sensitive data and/or from which sensitive data can be monitored.

With reference to Figure 1A, the customer endpoint device 101 is provided with a sensor 120 that is configured to detect and collect sensitive data 111 contained within data assets 110 accessible via the device 101. The sensor 120 can for instance include software that can be installed and/or executed on device 101 (for example loaded in memory and executed by a processor associated with the device 101). The sensor can also for instance comprise software that can be installed and/or executed on a different device within the customer environment 100, provided that this device has access to the data assets 110 that are accessible via the device 101 either from time to time or on a continual basis. In both cases, the software can be controlled and/or maintained by the service provider. The sensor 120 can also for instance be implemented as a hardware device located inside or outside the device 101. As can be appreciated, the sensor 120 can include a plurality of software or hardware modules that make it possible to detect sensitive data 111 contained within data assets 110 accessible via the device 101, and securely transmit it offsite to the service provider environment 200.

The sensor 120 includes a data surveillance module 121 that is configured to monitor data assets 110. As can be appreciated, data assets 110 can correspond to any type of digital data capable of being interpreted by and/or stored on a computer system. For example, data assets can include files (such as pictures, videos, text files, log files, documents, source code, etc.), databases (including database structures and records stored therein), and streams (including audio, video, or any other type of data stream such as channel, event logs, and log streams), among others. The data surveillance module 105 can be configured to monitor data assets 110 stored locally on the device 101 and/or external data assets 110 accessible via the device 101, such as a network, a cloud drive or a removable storage device, including for instance an optical, magnetic or solid-state storage media, such as a CD-ROM, a DVD, a diskette, a cassette, an external magnetic or solid-state hard drive, a memory card, a flash drive, a mobile phone, a PDA, a digital audio player, a digital camera, etc. The surveillance module 121 scans data assets 110 in order to identify and track data of interest contained therein, such as a notable section of a data asset 110 or individual data element contained within data asset 110. As can be appreciated, one or more portions of data assets 110 can be considered as being of interest based on a configurable set of rules, such as if the one or more portions contain a specified type of information and/or match a defined pattern or structure. A detection event can occur when information of interest is detected within a data asset, such as when information contained within the data asset is determined to contain the specified type of information and/or match the defined pattern or structure.

In the present embodiment, the data of interest tracked by surveillance module 121 relates to sensitive client information and is thus referred to as sensitive data 111. Such sensitive data 111 can include, for example, personal information such as social security numbers, credit card numbers, driver's license number, telephone numbers, passport numbers, etc. As can be appreciated, this type of sensitive data 111 can exist as sequences of characters or a string having a particular format. Accordingly, sensitive data 111 can be identified by surveillance module 121 using regular expressions or other text-based pattern recognition techniques. In some cases, sensitive data 111 can be contained within data assets 110 corresponding to text-based files (i.e. files of any format containing at least some binary data corresponding to encoded characters), and the surveillance module 121 can scan the binary data contained within the file to look for sensitive data 111. In other cases, the surveillance module 121 can process data assets 110 to extract data therefrom and identify sensitive data 111 in the extracted data. By way of example, if a data asset corresponds to an image, surveillance module 121 can apply optical character recognition (OCR) to identify text data contained therein, and then identify sensitive data 111 contained in said text. As another example, if a data asset corresponds to an audio file, surveillance module 121 can apply voice recognition to convert spoken phrases to text data, and then identify sensitive data 111 contained therein.

Although the sensitive data 111 described above typically exists in the form of text, it is appreciated that in some embodiments, sensitive data 111 can exist in other forms. For example, in some embodiments, sensitive data 111 can correspond to a portion of an image or video, such as a face or other identifiable personal information. Accordingly, surveillance module 121 can be configured to use other suitable pattern recognition techniques, such as facial recognition and/or artificial intelligence (AI) to identify sensitive data 111.

Upon identifying sensitive data 111, the data surveillance module 121 can be configured to extract such sensitive data 111 from data asset 110 for storage, monitoring and consultation at another point in time. In some embodiments, extracting the sensitive data can comprise normalizing the extracted data. As can be appreciated, sensitive data of a given type can be presented in different arrangements or formats in data assets. Accordingly, normalizing the extracted data can comprise formatting the extracted data such that the data respects a predefined arrangement or format associated with its corresponding type of sensitive data. As an example, extracted data corresponding to credit card numbers can be normalized such that they are formatted as a 16-digit number, without any intermediate spaces, dashes, etc.

In some embodiments, normalizing the extracted data can be achieved via configuration of regular expressions. As can be appreciated, a regular expression or other text-based pattern can match a string of text data that includes sensitive data 111 in addition to one or more characters that are not part of the sensitive data 111 and/or that are not part of the desired formatting. As an example, a pattern to detect credit card numbers in text data can be configured to match a series of digits corresponding to a possible credit card number with zero, one or more characters between the digits, for instance spacing or non-printing characters. Such a pattern could match strings such as "4556170433550010", "4556 1704 3355 0010", "4556-1704-3355-0010" and "45561.704-335/50010". In this example, the surveillance module 121 can be configured to recognize only the digits correspond to a possible credit card number, such that all four exemplary matched strings would be extracted as a normalized, identical string "4556170433550010" of sensitive data 111. This can for instance be implemented by configuring regular expressions in surveillance module 121 to include syntax for capturing groups of numbers only, such that the concatenation of the strings matched in the capturing groups include the sensitive data 111 and nothing else.

In addition to extracting sensitive data 111, surveillance module 105 can be configured to extract context information associated with the sensitive data 111, for example to assist in validating that sensitive data 111 was correctly identified and/or to assist in understanding the content and/or relevance of sensitive data 111 when ultimately reviewed by an analyst. Such context information can, for example, include content of the data asset immediately preceding and following the sensitive data 111.

In the illustrated embodiment, the sensor 120 further includes a properties gathering module 123 that is configured to acquire properties relevant to the analysis of sensitive data 111 detected by the surveillance module 121. Such properties acquired via the properties gathering module 123 can be referred to as sensor-level properties or metadata. Sensor-level properties can include, for example, file metadata or information, host metadata or information and/or match metadata or information. File metadata or information can correspond to information relating to the data asset, e.g. the file, in which the sensitive data was detected, such as an identifier uniquely associated with the data asset, such as the name of the file, the path of the file, a previous path if the file was moved, the size of the file, the owner of the file, the group of the file, the status of the file (e.g. available, in the recycle bin, deleted), the permissions set on the file, a timestamp corresponding to when the sensitive data was detected in the file, the creation, modification and last access time of the file, etc. Host metadata or information can correspond to information relating to the endpoint device 101 from which the sensitive data was detected, such as the host name of the device, the host platform, platform family, and platform version if applicable, the operating system, the kernel version, the kernel architecture, the manufacturer, the model, the IP address, etc. Match metadata or information can correspond to information relating to the detection of the sensitive data, such as a fingerprint corresponding to the sensitive data 111, an encrypted copy of the sensitive data, an encrypted copy of the context information, an identifier corresponding to the regular expression and/or the pattern implemented by the surveillance module 121 that triggered a detection event, a count of unique instances of sensitive data detected in the data asset, a likelihood that the detection event matches a specified type or pattern of sensitive data, etc.

The sensor 120 includes a hashing module 125 configured to generate the fingerprint, or hash, of the sensitive data via a hashing function, for example by calculating a first numeric value uniquely associated with the sensitive data 111 (i.e. a hash input), and applying a cryptographic hash function to the first numeric value to produce a second numeric value (i.e. the hash output) that is different than the first numeric value. As can be appreciated, a cryptographic hash function has a number of properties that can make it suitable for fingerprinting. This algorithm is deterministic, i.e. the algorithm applied to the first numeric value will always give as a result the same second numeric value. It is fast, i.e. applying the algorithm to a numeric value via a processor will not produce a significant load for a significant duration on that processor. On the other hand, it is irreversible, i.e. there is no way to revert the calculation and, starting from the second numeric value, obtain the first numeric value that is more efficient than applying the algorithm to all the possible first numeric values until the right one is found. It is quasi-injective, i.e. it is practically impossible when applying the algorithm to two different first numeric values that the same second numeric value will result. This implies that when a number of second numeric values are identical, it is nearly certain that the first numeric values were also identical, even though it is not possible to know what they were. Moreover, it demonstrates an avalanche effect, i.e. a very small variation in the first numeric value will usually result, after applying the algorithm, in a large variation in the second numeric value, such that it is impossible to tell when looking at second numeric values whether the first numeric values were similar. Many cryptographic hash functions are known in the art, including for instance these of the Message-Digest (MD), the Secure Hash Algorithm (SHA) and the BLAKE families of functions. As can be appreciated, the same cryptographic hash function can be used in all sensors 120 deployed to endpoint devices 101 in the customer environment 100 to ensure consistency in generating fingerprints.

In some embodiments, the hashing module 125 can be configured to apply a salt with the sensitive data 111 before hashing it. A salt is any arbitrary piece of data that is added to data before it is hashed. This salt can be referred to as a customer-side salt 113. All sensors 120 associated with devices 101 in the customer environment 100 of a specific customer can be configured to use the same customer-side salt. The salt 113 can be provided as part of the sensor 120 configuration when it is deployed, stored in a file accessible by the sensor 120, or stored in a secure central location in the customer environment 100 (for example in customer key vault 130) and obtained by the sensor 120 only when needed, among other configurations. The customer-side salt 113 can be applied to the sensitive data 111 using any suitable technique, for instance by concatenating the sensitive data 111 and the customer-side salt 113. This concatenation can include for instance prepending or appending the customer-side salt 113 to the sensitive data 111.

The sensor 120 further includes a data encryption module 127 configured to encrypt the sensitive data 111, context information, and/or any number of properties extracted by the properties gathering module 123, creating a cryptogram corresponding to a data detection event. The data is encrypted using a provided encryption key. Sensitive data 111 and/or properties encrypted in this fashion can be referred to as a cryptogram. In the illustrated embodiment, the provided encryption key corresponds to a public encryption key 131 controlled by the customer. The public encryption key 131 can be generated on and/or retrieved from a customer key vault 130 that is part of the customer environment 100. The key vault 130 can correspond to any suitable system and/or service that allows generating and/or safeguarding cryptographic keys. By way of example, the key vault 130 can correspond to a Microsoft Azure Key Vault service, although it is appreciated that other services are possible.

It should further be appreciated that the public encryption key 131 can be associated and/or paired with a corresponding private key 133 also stored in the customer key vault 130. The private key 133 can subsequently be used to decrypt the cryptogram that was created using the public key 131, for example using a customer decryption module 119. As can be appreciated, the private key 133 is referred to as being "private" in that it remains within the customer environment 100, is not shared with third parties and/or external devices, and preferably never leaves the key vault 130. This is in contrast to the "public" key 131 which may be communicated to other parties or devices as needed. For example, the public key 131 may be copied within the sensor 120 and/or may be communicated to the service provider environment 200.

In the illustrated embodiment, the customer decryption module 119 is provided as part of the customer environment 100. In this fashion, decryption of any cryptogram containing sensitive data 111 can occur within the customer environment 100, allowing for control of sensitive data 111 to be maintained by the customer. As can be appreciated, any suitable asymmetric cryptography techniques can be used by data encryption module 127 and customer decryption module 119 to encrypt and decrypt using the public 131 and private 133 keys. Moreover, any suitable service can be used to implement customer decryption module 119, including key vaults that provide decryption functions, such as the Microsoft Azure Key Vault service.

The sensor 120 also includes a communication module 129 that communicates with a corresponding communication module 201 of the service provider environment 200 for transmitting information relating to detection events. The communication module 129 can be configured to receive data detection event information from one or more of the properties gathering module 123, the hashing module 125 and/or the data encryption module 127. The data detection event information can therefore comprise, for instance, sensor-level properties or metadata, a fingerprint or hash of the detected sensitive data, and/or a cryptogram corresponding to the data detection event. The communication module 129 prepares a payload corresponding to the data detection event information for transmission to the communication module 201 of the service provider environment 200 through a communication link. For instance, the communication module 129 can prepare a number of packets for transmission over a TCP/IP network such as the Internet. In some embodiments, the transmission between both communication modules 129 and 201 operates through a cryptographic protocol such as the Secure Sockets Layer (SSL) or the Transport Layer Security (TLS).

With reference to Figure 1B, in the illustrated embodiment, the service provider environment 200 includes a hashing module 221 that is configured to hash the fingerprint of the sensitive data 111 as an additional layer of security. In some embodiments, the hashing module 221 can be configured to apply a salt to the fingerprint before hashing it. This salt can be referred to as a server-side salt 293. In some embodiments, the server-side salt 293 is private and can only be accessed from a secure storage at runtime by the hashing module 221. For instance, the server-side salt 293 can be stored in the key vault 290. As can be appreciated, in embodiments where a plurality of customer environments 100 are monitored for sensitive data, the hashing module 221 can either use a single server-side salt 293 to hash the fingerprints of sensitive data 111 received from the plurality of customer environments 100, or can use a server-side salt 293 that is specific to each customer environment 100 and is applied to fingerprints corresponding to data detected on customer devices 101 associated with the specific customer environment 100 but not with other customer environments. As was the case for the customer-side salt, the server-side salt 293 can be applied to the fingerprints for instance by concatenating the fingerprint and the server-side salt. This concatenation can include for instance prepending or appending the server-side salt to the fingerprint. In some embodiments, the server-side salt 293 can be applied using a different method than the customer-side salt. For example, in embodiments where the customer-side salt is prepended to sensitive data prior to hashing, the server-side salt 293 can be appended to the fingerprint prior to hashing.

The service provider environment 200 also includes a properties gathering module 231 that is configured to acquire properties relevant to the analysis of a sensitive data 111 that need not or cannot be acquired in the customer environment 100 by the sensor 120. Such properties acquired via the properties gathering module 231 can be referred to as server-level properties. Server-level properties can include, for example enhanced match information such as match properties and/or risk profile information. Match properties can for instance include the country that the sensitive data 111 corresponds to (e.g. for a passport or social security number, the country that issued the corresponding passport or social security card), the type of information it corresponds to (e.g. credit card number, passport number, etc.), the specific pattern and/or regular expression that matched, the category corresponding to that type (e.g. payment card industry (PCI), protected health information (PHI), personally identifying information (PII), etc.), the regulation that is involved with that type (e.g. the *General Data Protection Regulation* (GDPR), the *Health Insurance Portability and Accountability Act* (HIPAA), etc.), the classification of the file corresponding to the asset 110 where the sensitive data 111 was detected, the status of that file (e.g. available, in the recycle bin, deleted), etc. Risk profile information can for instance include a risk profile associated with the detection event. As an example, the risk profile can be associated to the specific sensitive data 111 or to the file corresponding to the asset 110 where the sensitive data 111 was detected, quantity vs activity information, a risk score associated with the sensitive data 111 or to the regular expression and/or pattern, qualifiers, indicators, etc. The risk score can correspond to a level of risk associated with the detection event and can be calculated based on customer-defined weights that can be related to the type of sensitive information. As an example, risk points can be computed. For instance, a credit card number can be associated to 1 risk point and a social security number can be associated to 2 risk points. If it is detected that a file was transferred to a removable storage device, this can be considered an exfiltration type of detection event which can for instance either correspond to a certain amount of risk points or correspond to a certain factor e.g., 2, by which the sum of the risk points associated to the sensitive data 111 in the file is multiplied. Other methods can comprise comparing the behaviour of a user with the user's past behaviour to compute a risk factor responsive to behaviour changes.

The service provider environment 200 further includes a cryptographic module 211 that is configured to encrypt the detection event information before storage and to decrypt said information when required by an analyst. It is appreciated that, in some embodiment, a part of or all detection event information is already encrypted by the data encryption module 127 of the sensor 120, the use of cryptographic module 211 therefore resulting in said information being doubly encrypted. The cryptographic module 211 can for instance be configured to use asymmetric cryptography by using a public encryption key 205 for encryption and a corresponding private encryption key 291 for decryption, or to use symmetric-key cryptography by using an encryption key and a decryption key. All keys may for instance be stored in a service-provider key vault 290.

The service provider environment 200 further includes a storage module 241 that is configured to store detection event information, including the doubly hashed sensitive data, in association with the relevant sensor-level and/or server-level properties, e.g., including the timestamp of the detection event and the identifier associated with the data asset in which the detection event occurred. The storage module 241 can for instance embody an entity-relationship model to represent relationships associating detection events and relevant metadata or properties. The storage module 241 can comprise any suitable storage accessible, for example via a backend server, in the service provider environment 200, and configured to store the relationships associating detection events and relevant metadata or properties. In some embodiments, the storage module 241 comprises a database with a structure optimized to increase the performance of the storage module 241 and/or to model complex relationships between detected sensitive data and who has access to the detected sensitive data via different channels. The database can for instance be implemented using a graph database such as an RDF store that can be manipulated or searched using a query language such as SPARQL or using a relational database management system (RDBMS) that can be manipulated or searched using a query language such as SQL.

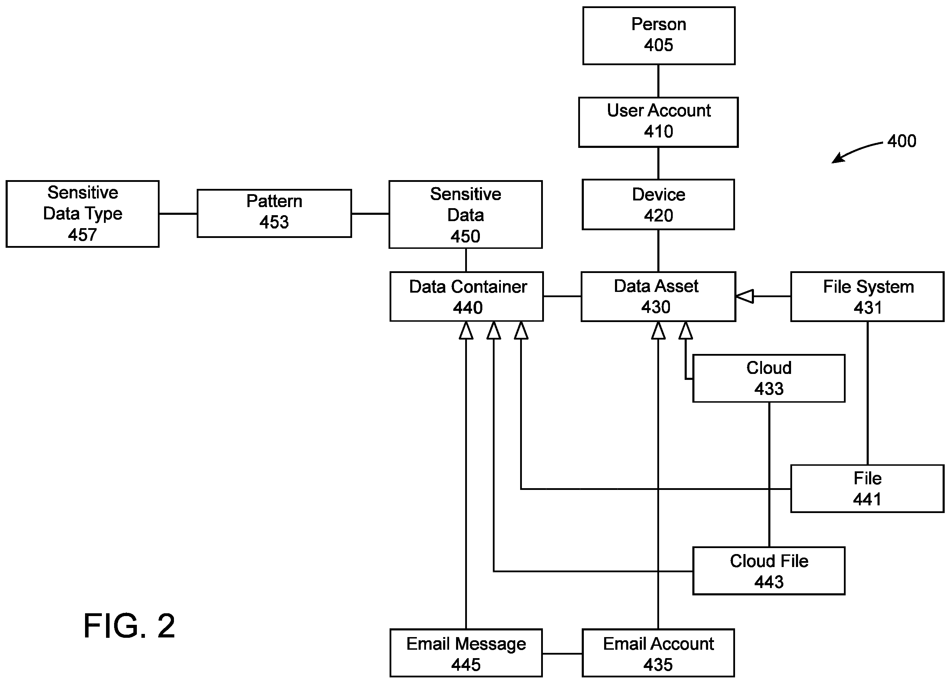

With reference to Figure 2, a database structure that can be used to implement the database of storage module 241 is illustrated through an exemplary class diagram 400. When a detection event occurs, a sensitive data object 450 can be created to store the hashed sensitive data 111, and to store or be linked to any relevant sensor-level and server-level properties. Each sensitive data object 450 can be associated with a pattern object 453, reflecting the regular expression and/or pattern that was triggered, while the pattern object 453 itself can be associated with a sensitive data type object 457, corresponding to the type of sensitive data that was detected (such as a credit card, social insurance number etc.). Each sensitive data object 450 can also be associated with one or more data container objects 440, reflecting characteristics of the data asset(s) 110 where the sensitive data 111 was detected. The data container object 440 can for instance be a file object 441, a cloud file object 443, or an email message object 445, among others. Each data container object 440 can also be associated with a data source object 430, reflecting the data source on which the data asset is stored. The data source object 430 can for instance be a file system object 431 if the data container object 440 is a file object 441, a cloud object 433 if the data container object 440 is a cloud file object 443 or an email account object 435 if the data container object 440 is an email message object 445, among others. Each data source object 430 can also be associated with a device object 420, corresponding to a device where the data source is located, such as a particular workstation or server. The data source object 430 can further be associated with a user account object 410, for example corresponding to a user account that was used to access the data asset on the data source, such as an active directory UPN account or user domain account. Further, one or more user account objects 410 can be associated with a person object 405 corresponding to a person within the organization. Although not illustrated, it is appreciated that the database structure can also model one or more relationships of the person object 405 within the organization, such as the person being a member of a given department, reporting to a given person, etc. Although particular objects and relationships have been described, it is appreciated that further objects and relationships can be modelled in the database as necessary.

As can be appreciated, a database structure such as the one described above can allow modelling detection events in the form of a hierarchy to give a holistic portrait of the context in which the sensitive data was detected. The database structure can also make it possible to facilitate efficient queries to the database, including for instance a query to list all the sensitive data 450, data container 440, data asset 430, device 420 and user account 410 objects associated with a sensitive data type 457 object, or a query to list all the sensitive data 450 objects associated with a given user account 410 object, among others.

Referring back to Figure 1B, in the illustrated embodiment, the service provider environment 200 also includes a searching module 251 configured to retrieve detection event information from the storage module 241 based on provided queries or search parameters. The queries or search parameters can, for example, be received from an external device via communication module 201.

In the present embodiment, the communication module 201 includes a consultation module 203 for providing an interface allowing authorized parties to access detection event information stored in storage module 241. The consultation module 203 can correspond to any suitable interface and/or service that enables communication with a consultation or consumption device and/or that can act as a gatekeeper for controlling access to detection event information. In the present embodiment, the consultation module 203 comprises a web console and/or web server, although it is appreciated that other server types are possible. The web server is configured to serve web content for running a web application including a graphical user interface (GUI) for displaying detection event information. The web server can also be configured to serve assets to populate the GUI, including cryptograms containing the sensitive data and other relevant properties for display. As can be appreciated, various security protocols can be implemented to ensure that the consultation module 203 only provides detection event information to authorized parties. For example, the web server can be configured to only serve content to authorized clients and/or can only be accessible from clients on the same physical or virtual network.

By way of example, the consultation or consumption device communicating with the consultation module 203 can correspond to an analyst workstation 303 that is part of analyst environment 300. The analyst workstation 303 can correspond to any computing device operable by an analyst, and can include a desktop computer, laptop computer, tablet, smartphone, etc. In the present embodiment, the analyst workstation 303 includes a communication module 301 that acts as a client for communicating with the web server implemented via consultation module 203. The communication module 301 can, for example, comprise a web browser application configured to receive web content and corresponding assets, and to run a corresponding web application that generates a GUI for display on a corresponding display device in a user interface module 310 of the analyst workstation 303. It is appreciated that the communication module 301 can include other clients, such as a native application for communicating with the consultation module 203 and receiving and displaying data. The communication module 301 can be configured to communicate with consultation module 203 via any suitable secure and/or encrypted protocol, such as HTTPS.

As can be appreciated, at least some of the assets received from consultation module 203 can include cryptograms and must therefore be decrypted before their content can be displayed or otherwise consumed. Accordingly, the analyst workstation 303 can be configured to communicate with the customer environment 100 to decrypt such cryptograms. By way of example, in the present embodiment, the communication module 301 of analyst workstation 303 is configured to communicate with customer decryption module 119 via an application programming interface (API). More specifically, the web application in the analyst workstation communication module 301 can transmit cryptograms received from consultation module 203 to customer decryption module 119 for decryption. The customer decryption module 119 can be configured to validate that sensitive data 111 is permitted to be viewed on analyst workstation 303, and if permitted, the cryptogram can be decrypted using private key 133 from the customer key vault 130. The decrypted sensitive data 111 and other detection event information contained in the cryptogram can be subsequently returned to the analyst workstation 303 for display via the user interface module 310. As can be appreciated, any suitable secure communication techniques can be employed to ensure that sensitive data 111 is communicated securely between customer decryption module 119 in customer environment 100 and the analyst workstation 303 in analyst environment 300. By way of example, the communication module 301 can communicate with customer decryption module 119 via an encrypted communication protocol, such as HTTPS.

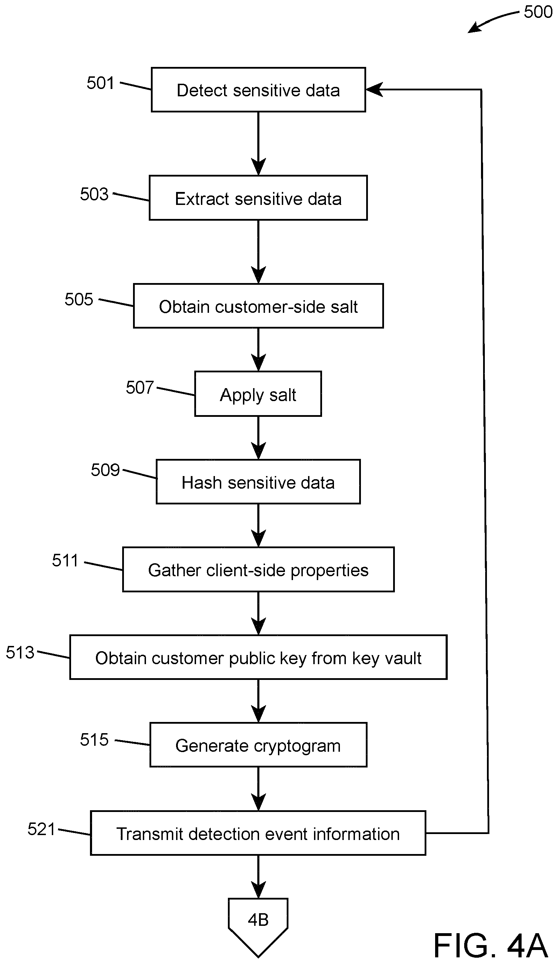

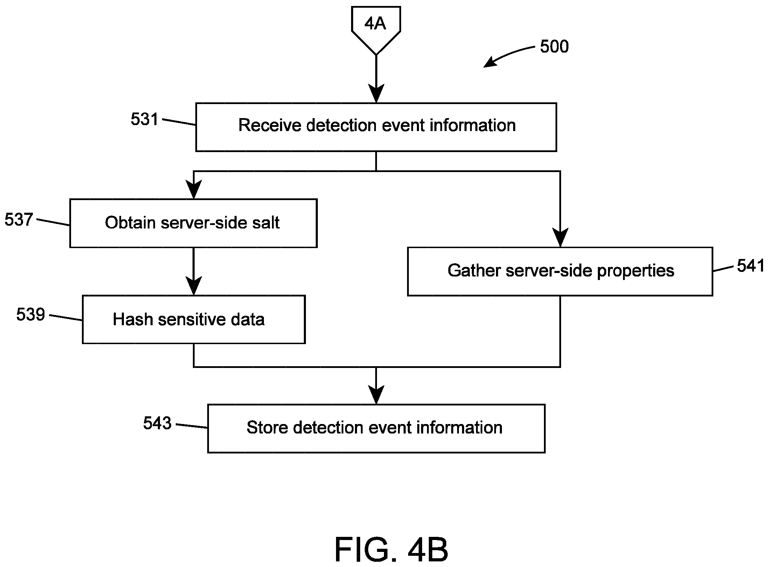

As can be appreciated, the system 1 can be used to implement a method to track the propagation of sensitive data 111 in a customer environment 100. With reference to Figures 4A and 4B, an exemplary method 500 is shown according to an embodiment. In the illustrated method, sensitive data 111 is detected on devices in customer environment 100 (such as endpoint devices 101), and corresponding detection event information is transmitted to service provider environment 200 for storage. The information relating to detection events can subsequently be processes, searched and displayed to indicate how sensitive data is propagated.

As shown in Figure 4A, the method 500 can include a first step 501 of detecting, via a plurality of sensors 120 deployed to a plurality of devices 101 within customer environment 100, sensitive data 111 within data assets accessible via the plurality of devices. As described above, the sensors 120 can correspond to software deployed to the plurality of devices. Accordingly, the method can include preliminary steps of deploying the sensor software to the plurality of devices 101, and registering the software with the service provider environment, including registering the customer's authentication service and key vault through the sensor 120 and/or providing the sensor software with access to public key 131 that can subsequently be used for encryption and/or obtaining a customer-side salt either from a secured location in the customer environment 100 or through a secured communication link with the service provider environment 200.

The detection of sensitive data can be carried out by a surveillance module 121 operating as part of the sensor 120 deployed to each of the plurality of devices. As can be appreciated, the sensitive data 111 can be detected during monitoring of data assets 110 on a plurality of data sources within customer environment. In some embodiments, monitoring data assets can comprise continuously and/or regularly monitoring data assets stored on, or accessible from, the plurality of devices 101 to identify data assets containing data matching one or more predefined patterns or structures. As explained above, detection of sensitive data can be implemented using regular expressions or other text-based pattern recognition techniques. In such embodiments, a positive pattern match will correspond to a sensitive data detection event. In some embodiments, monitoring can comprise performing a full scan, wherein all the data assets stored on or accessible from the device 101 are searched for sensitive data 111 and/or a targeted scan, wherein only data assets that are newly stored on or accessible from the device 101 or have changed since the last scan are searched for sensitive data 111.

Upon detecting sensitive data 111, a subsequent step 503 can comprise extracting, by the plurality of sensors 120 (for example via surveillance module 121), the sensitive data 111 from the identified data assets. In some embodiments, the sensitive data extraction step 503 can include normalizing the sensitive data 111 by formatting the sensitive data 111 to respect a predefined arrangement or format, and/or by removing extraneous characters such as spaces, dashes, other special characters, etc. As an example, in embodiments where regular expressions are used to detect sensitive data via pattern matching, the regular expressions can be configured to capture groups corresponding to only relevant sections of the sensitive data, and normalizing the sensitive data can comprise concatenating the strings matched by these groups to obtain the sensitive data with extraneous characters omitted.

Once the sensitive data 111 has been extracted, subsequent steps can be carried out to generate a fingerprint therefrom. In the present embodiment, generating the fingerprint comprises salting and hashing the sensitive data 111 via hashing module 125, although it is appreciated that other methods for generating a fingerprint are also possible.

In more detail now, generating the fingerprint can include a step 505 of obtaining a customer-side salt. In some embodiments, the customer-side salt can be retrieved from local storage on the device 101, for example from an object or machine code file or in a configuration file stored on the device 101, including an encrypted configuration file that can be decrypted at runtime. In some embodiments, the customer-side salt can be retrieved from a remote storage or service, for example dynamically at runtime by querying a key vault 130 hosted in the customer environment 100. It is appreciated that in embodiments where a plurality of customer environments are monitored, each of the plurality of sensors 120 deployed in a common customer environment 100 can use the same customer-side salt.

A subsequent step 507 of generating a fingerprint can include applying the customer-side salt to sensitive data 111 to produce salted data. It is appreciated that both sensitive data 111 and the salt can be treated as, or converted to, text strings. Applying the salt can therefore include concatenating both text strings, for instance by prepending or appending the salt to the sensitive data 111. As can be appreciated, other procedures to apply the salt are possible, as long as the procedure is deterministic, in that given a particular sensitive data 111 and a particular salt, the result will always be the same. As an example, the salt can be interpolated in the sensitive data 111 and/or the sensitive data 111 can be interpolated in the salt. As another example, sensitive data 111 and the salt can be treated as, or converted to, numerical values, and applying the salt to the sensitive data can comprise applying a mathematical function to combine both numerical values.

Finally, step 509 can include hashing the salted data by the hashing module 125 to produce the fingerprint in the form of a first hash. It is appreciated that the salted data can be treated as, or converted to, a numerical value. Hashing the salted data can thus include applying a cryptographic hashing function to the numerical value corresponding to the salted data. Any function that is deterministic and at least quasi-injective can be suitable for use as a cryptographic hashing function by the hashing module 125. Functions that are also irreversible and demonstrate an avalanche effect can be particularly suitable, as they can allow for a superior level of data security. Suitable cryptographic hashing functions are well known in the art, and include for instance MD6-256, SHA-256, SHA-512, SHA3-256, BLAKE2, BLAKE3, etc. Certain of these functions, such as BLAKE3, can be implemented with either serial or parallel algorithms. It is appreciated that all sensors 120 deployed in a common customer environment 100 can employ the same cryptographic hashing function.

In some embodiments, the customer-side salt and/or the cryptographic hashing function used by the hashing module 125 of all the sensors 120 in a customer environment 100 can be modified. This can be useful, for instance, if the salt has been leaked or has otherwise become known to unauthorized persons and/or if a more secure cryptographic hashing function has become available. In such embodiments, the customer-side salt can be rotated on a regular basis if desired as a precautionary measure to pre-empt leaks. As an additional step, when the customer-side salt and/or the cryptographic hashing function is modified, a complete scan of all the data assets stored on or accessible from each customer endpoint device 101 in the customer environment 100 can be performed.

Subsequent to or in parallel with generating a fingerprint, a following step 511 can include gathering sensor-level properties via the properties gathering module 123. Such properties include host information, file information and match information, as described above. Notably, the match information can include the fingerprint generated in the previous steps. As can be appreciated, host and file information can be gathered via any suitable means, for example by interacting with APIs provided by a kernel, a driver or an application installed or running on the device 101, based on information obtained from the surveillance module 121.

In some embodiments, the sensitive data can be encrypted to produce a cryptogram. The sensitive data can be encrypted for instance using a public key 131 that is part of an asymmetric key pair that also comprises a private key 133 controlled by the customer. Accordingly, a first encryption step 513 can include obtaining the public key 131 by the data encryption module 127. In some embodiments, the public key 131 can be retrieved from a remote storage or service, for example at runtime by querying customer key vault 130 hosted in the customer environment. In other embodiments, the public key 131 can be retrieved from local storage on the device 101, for example from an object or machine code file or in a configuration file stored on the device 101, including for instance an encrypted configuration file that is decrypted at runtime. In further embodiments, the public key 131 can be retrieved from the service provider environment 200, where it is registered when the customer deploys and configure the sensors 120. As a subsequent encryption step 515, the sensitive data can be encrypted using the customer-controlled public key 131 to produce the cryptogram.

Although in the present embodiment the cryptogram is generated to encrypt sensitive data, it is appreciated that in some embodiments the cryptogram can also be generated to encrypt additional information that should not be accessible from the service provider environment and/or for which the client should retain exclusive control. By way of example, in some embodiments the cryptogram can include at least some of the properties gathered by the properties gathering module 123, such as at least some host information, file information and/or match information that is deemed to be sensitive.

A subsequent step 521 of the method 500 can include transmitting detection event information to the service provider environment 200 via the communication module 129. The detection event information can include, for example, the cryptogram and the sensor-level properties. In some embodiments, the transmission can be carried out over a secured communication link. In such embodiments, as part of step 521, the customer-side communication module 129 can obtain, over a communication link with the service provider-side communication module 201, a public key that is part of an asymmetric key pair that also comprises a private key controlled by the service provider. It is appreciated that the public key can be relatively static, in which case it can be stored for instance in the sensor 120 until a defined expiration time. Using the public key, the customer-side communication module 129 can then encrypt the detection event information, which can include both the cryptogram and unencrypted sensor-level properties. Step 521 can include transmitting the encrypted detection event information over a communication link between the customer environment 100 and the service provider environment 200. The transmission can for instance occur over a TCP/IP network such as the Internet, using a protocol such as HTTP. It can be appreciated that alternative means of establishing a secured communication link between the customer and the service provider environments 100 and 200 and of sending information can be used. For instance, to establish a secured communication link, any cryptographic protocol, such as for instance SSL or TLS, can be used, along with any key exchange method, such as for instance RSA or Diffie-Hellman, using a signed or an unsigned public key, and any cipher, such as for instance AES or Camellia. Moreover, any data transmission protocol can be used to transmit the payload, such as for instance FTP, SCP or AS2.

As can be appreciated, during continuous and/or regular monitoring of data assets, steps 501 through 521 can be repeated to continue detecting and extracting sensitive data, and transmitting relevant detection event information to the service provider environment 200.

With reference to Figure 4B, subsequent steps of method 500 carried out in service provider environment 200 (also referred to as the backend), for example via backend server, will now be described. A first step 531 can include receiving, via communication module 201 on a backend server in the service provider environment 200, the detection event information sent in step 521. In embodiments where the transmission is carried out over a secured communication link, step 531 can further include decrypting the transmitted information, for example by obtaining the private key corresponding to the public key used by the customer-side communication module 129 to decrypt the encrypted information. It is appreciated that following decryption, the information can include both unencrypted information (e.g. sensor-level properties) and encrypted information (information contained in the cryptogram). The information contained in the cryptogram cannot be decrypted in the service provider environment 200 because decrypting it requires the customer private key 133 which remains in the customer environment 100.

Once the detection event information is received, subsequent steps can be carried out to supplement and further secure said information prior to storage. As an example, the detection event information can be further secured by adding an additional layer of obfuscation to the fingerprint of sensitive data. In the present embodiment, this is achieved via hashing module 221 by additionally salting and hashing the first hash contained in the fingerprint to produce a second hash. More specifically, this can include a first step 537 of obtaining a server-side salt 293. As described above, the salt can for instance be stored in a secure key vault 290, which can operate on the same server as the hashing module 221, or on a distinct connected server. Accordingly, obtaining the server-side salt 293 can comprise querying the secure key vault 290 at runtime. As explained above, in some embodiments, a single salt 293 can be applied to the information received from all serviced customer environments 100, while in some other embodiments, a specific salt 293 can be used for each individual, or a subset of, the serviced customer environments 100. In the latter case, obtaining the server-side salt 293 can comprise determining the customer environment from which the detection event information was received, and retrieving a server-side salt associated with the determined customer environment.

Once the server-side salt has been obtained, a subsequent step 539 can include hashing the fingerprint using the server-side salt to produce the second hash. As can be appreciated, when hashing the fingerprint, the server-side salt 293 can be applied by the server-side hashing module 221 to the fingerprint using similar techniques as those described above in connection with applying the customer-side salt to the sensitive data. In some embodiments, the server-side salt 293 can be applied using the same technique as was used to apply the customer-side salt to the sensitive data, while in other embodiments the technique used to apply the server-side salt can be different than the technique used to apply the customer-side salt. For example, in embodiments where the customer-side salt is prepended to sensitive data prior to hashing, the server-side salt 293 can be appended to the fingerprint prior to hashing. In some embodiments, the same technique to apply server-side salt can be used for all customers, whereas in other embodiments, different salting techniques can be used for different customers. In the latter case, hashing the fingerprint can comprise determining the customer environment from which the detection event information was received, and applying the server-side salt using a technique associated with the determined customer environment.

Supplementing the detection event information can include gathering additional properties relevant to the analysis of sensitive data. Such additional properties can be gathered at the backend server, for example via properties gathering module 231, and are thus referred to as server-level properties. In the illustrated embodiment, a step 541 of gathering additional server-level properties is carried out in parallel with the server-side hashing and salting. It is appreciated, however, that in other embodiments this step can be carried out in sequence with hashing and salting. As detailed above, the server-level properties can include match properties and/or risk profile information. In some embodiments, match properties can be derived from one or more sensor-level properties. Accordingly, gathering match properties can comprise processing the one or more sensor-level properties to derive match properties therefrom. By way of example, if the detection event was triggered by a specific pattern match, the pattern match included in the sensor-level properties can be used to determine the type of information associated with the match. In some embodiments, one or more risk factors can be calculated from the sensor-level properties and/or from sensor-level properties of other related matches. By way of example, risk profile information can be computed by aggregating information about the detection event currently being processed with past detection events.

Once supplemented and secured, a final step 543 can include storing the detection event information via storage module 241. As explained above, the storage module 241 can for instance include a database implemented using a graph database such as an RDF store or an RDBMS. In either case, the storage step 543 can include generating and executing one or more SPARQL or SQL "INSERT" statements. As can be appreciated, depending on the database being used to store the detection event information, different steps can be carried out to create new records or objects in the database, and/or update existing records or objects to provide new relationships. For example, in the exemplary data model of Figure 2, the step of storing detection event information 543 can comprise generating a new sensitive data object 450 in the database, and linking it to new or existing parent objects, such as a new or existing data container object 440, which is in turn linked to a new or existing data source object 430, which is in turn linked to a new or existing user account object 410, which is in turn linked to a new or existing person object 405, etc. It is appreciated that, before being stored, the detection event information can be encrypted or re-encrypted by the cryptographic module 211.

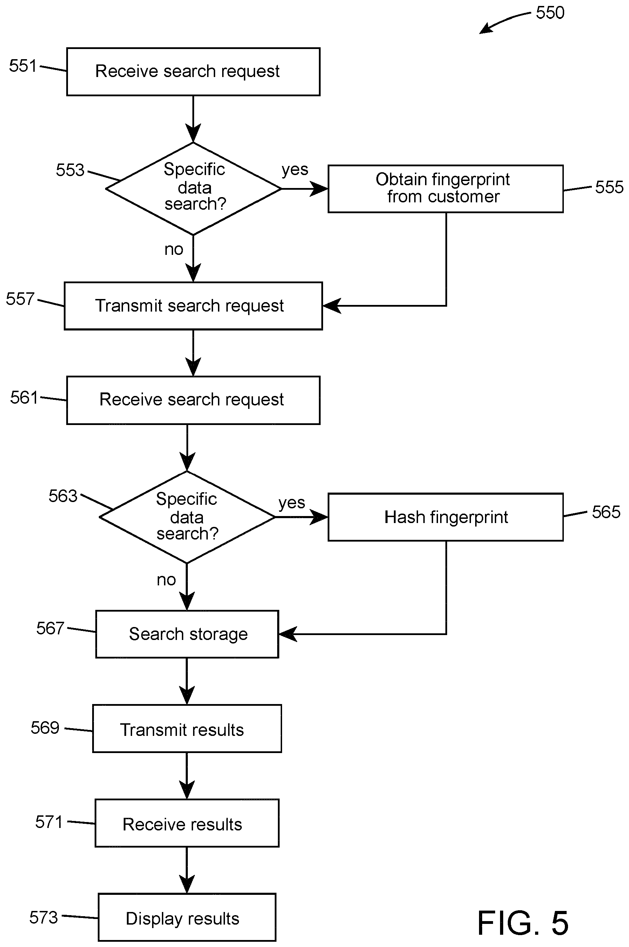

Following the secure storage of detection event information in service provider environment 200, such information can subsequently be accessed and displayed in analyst environment 300 to allow analyzing propagation patterns of sensitive data occurring within the customer environment. With reference to Figure 5, an exemplary method 550 for accessing and displaying detection event information in an analyst environment 300 is shown according to an embodiment.

In the illustrated embodiment, the method 550 includes a first step 551 of receiving an input corresponding to detection event information to display. The input can, for example, be received from an analyst via the user interface module 310 of analyst workstation 303, including inputs from a data entry device or the pointing device. The input can correspond to a search request, for instance directed to sensitive data to search for, including a specific sensitive data value, a type of sensitive data, and/or classification of sensitive data. Additionally or alternatively, the search request can specify one or more people, accounts, devices, etc. in possession of sensitive data to which the search can be limited, and/or a threshold number of people, accounts, device, etc. in possession of sensitive data to which the search can be limited. In embodiments where a plurality of customer environments are monitored, the search request can specify one of a plurality of customer environments to which the search should be directed. An additional authentication step can be carried out to authenticate the analyst workstation 303 and verify that the analyst workstation 303 and/or the analyst operating the workstation 303 is authorized to access detection event information associated with the specified customer environment. Subsequent steps can be carried out if the workstation 303 is authorized. Otherwise, the search request can be denied.

A subsequent step 553 can include determining whether the search request targets a specific sensitive data value. If the search targets a specified value, a subsequent step 555 can include generating a fingerprint of the specified value that can be used to conduct the search. In some embodiments, steps 553 and 555 can be carried out on the analyst workstation 303. For example, the fingerprint can be generated on the analyst workstation 303 by hashing the specified value using the customer-side salt, if available, to produce a first search hash. As another example, the fingerprint can be generated in customer environment 100 by using communication module 301 to send the specified value to the customer environment 100 over a secured connection. The fingerprint can subsequently be generated in the customer environment 100 by hashing the specified value using the customer-side salt 113 and using the same cryptographic hashing function used by the hashing modules 125 to produce the first search hash, before the fingerprint comprising the first search hash is subsequently returned to the analyst workstation 303.

A subsequent step 557 can include establishing a secure communication link between analyst environment 300 and the service provider environment 200, for instance via communication modules 201, 301 using one of the methods described above, and sending the search request from the analyst workstation 303 to the service provider environment 200. In the present embodiment, the search request can include the fingerprint, if such fingerprint was generated. Although in the present embodiment the fingerprint is generated prior to sending the search request to service provider environment 200, it is appreciated that other configurations are possible. For example, in some embodiments, the search request can be sent to service provider environment 200 including a specified value of sensitive data instead of a fingerprint/hash thereof. In such embodiments, steps 553 and 555 can be carried out in service provider environment 200, such that the fingerprint is generated by hashing specified value of sensitive data in the service provider environment 200 to produce the first search hash and/or by sending a request from the service provider environment 200 to the customer environment 100 to generate the fingerprint comprising the first search hash.

A subsequent step 561 can include receiving the search request by the communication module 201 of the service provider environment 200, following which it can be determined in step 563 whether the search request targets a specified sensitive data value. If the search targets a specified sensitive data value, i.e. if the search request includes a fingerprint, a subsequent step 565 can include hashing the first search hash in the received fingerprint to produce a second search hash. As can be appreciated, the second search hash can be generated via the hashing module 221 by using the server-side salt 293 and using the same cryptographic hashing function and techniques applied previously for fingerprints received via sensors 120.

A subsequent step 567 can include searching, via the searching module 251, for detection event information stored in the storage module 241 that corresponds to the search request. As explained above, the storage module 241 can include a database implemented using a graph database such as an RDF store or an RDBMS. In either case, the search step 567 can include generating one or more SPARQL or SQL "SELECT" statement for the storage module 241 to execute. With reference to the exemplary data model of Figure 2, a search request can for instance retrieve one or more sensitive data type 457 or sensitive data 450 object instances corresponding to the search request, with each instance being associated with data container 440, data asset 430, device 420 and account 410 object instances, etc., which can be efficiently retrieved as part of the same "SELECT" statement, thereby reducing the amount of computational resources used by the searching module 251. As can be appreciated, when the search request includes a specified sensitive data value, searching for detection event information 567 can comprise retrieving, from the storage module 241, detection event information associated with a sensitive data object 450 having a second hash that matches the second search hash included in the search request.

Once the detection event information has been retrieved, subsequent step can comprise transmitting 569 the retrieved detection event information via communication module 201, receiving 571 the detection event information via communication module 301 in analyst environment 300, and displaying 573 the detection event information via user interface module 310 of the analyst workstation 303. As can be appreciated, the detection event information received via communication module 301 can contain cryptograms of sensitive data and/or server/sensor-level properties. Accordingly, those cryptograms can be transmitted to the appropriate customer environment 100 for decryption such that the decrypted sensitive data and/or server/sensor-level properties can be subsequently displayed via the user interface 310. Exemplary methods for requesting decryption of cryptograms through customer environment 100 prior to display in analyst environment 300 are described in related European Application No. 22192272.7, filed August 27, 2021, and entitled SYSTEM AND METHOD FOR SECURE COLLECTION AND DISPLAY OF SENSITIVE DATA.

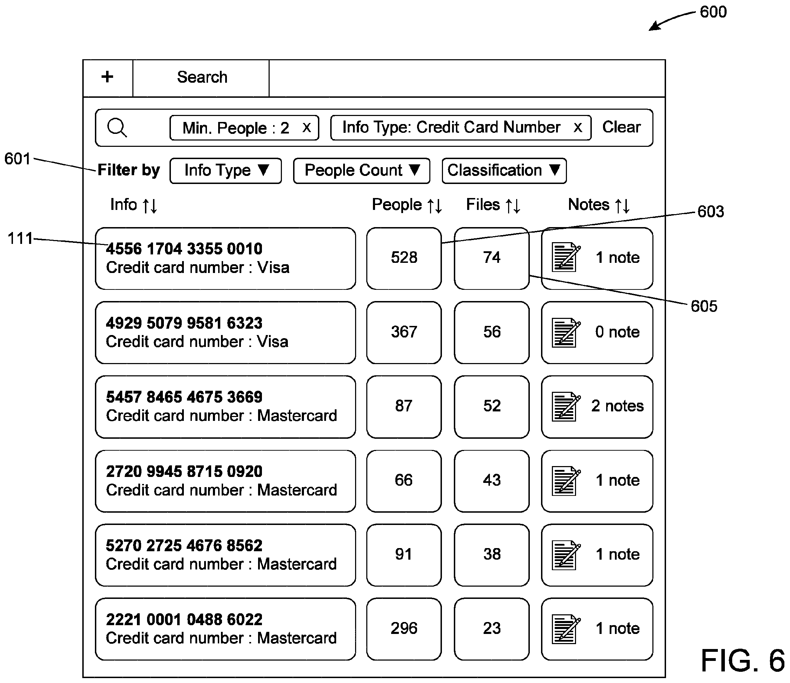

With reference to Figure 6, an exemplary GUI 600 for displaying results of a search for detection event information via user interface module 310 is shown according to an embodiment. In the provided example, the results are for a search directed to a specified type of sensitive data (e.g., credit card numbers) and limited to a threshold number of people having access to the specified type of sensitive data (e.g., a minimum of 2 people). Drop down menus 601 are provided to allow adding constraints to refine the search results. The results can be presented in a structured format, divided in a number of elements each showing a sensitive data 111 and information on detection events associated with said data. As an example, the results can be formatted in a table, wherein each line can correspond to a sensitive data 111 that was detected on a number of devices 101 in a customer environment 100. On each line, the sensitive data 111 itself can be shown, along with the number of distinct devices 101 in which sensitive data 111 was detected and/or the number of distinct individuals 603 that have been found to have access to sensitive data 111 (via one or more of their accounts, devices, etc.) and/or the number of distinct files 605 that have been found to contain the sensitive data. As can be appreciated, the GUI 600 can be configured to allow searching and displaying more detailed information about sensitive data 111 in response to user input. For example, when a user clicks on a displayed sensitive data 111, a new search directed to the value of the selected sensitive data can be initiated.

As can be appreciated, in some embodiments, the GUI 600 can for instance be a web page consisting of code in one or more computer languages, such as HTML, XML, CSS, JavaScript and ECMAScript, that is generated programmatically by the communication module 201 of service provider environment 200, and rendered by an application such as a web browser of the analyst workstation 303 in the analyst environment 300. In other embodiments, the GUI 600 can for instance be an organization of a number of graphical widgets created by an application running in consulting environment 300 and using a user interface library, such as the Microsoft Foundation Class Library, Windows Forms, Cocoa, GTK and Qt, to render information received from the communication module 201 on the analyst workstation 303. The same applies to windows 700 and 750, described below.

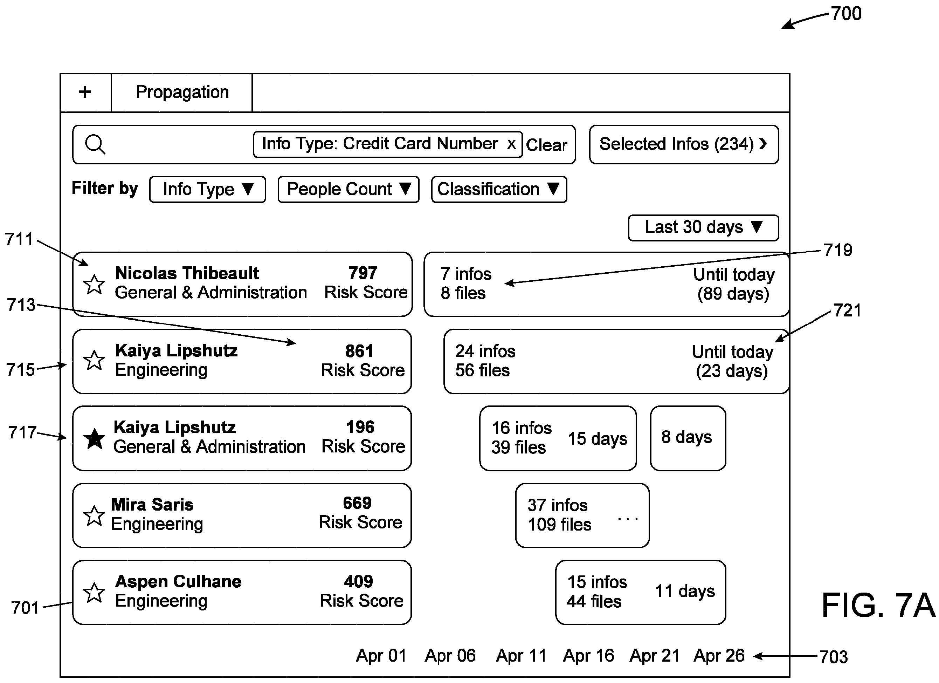

With reference to Figure 7A, another exemplary UI 700 for displaying results of a search detection event information is shown according to an embodiment. In the present example, the results are for a search including a specified value of sensitive data (i.e. 234 specified credit card numbers). The UI 700 can be organized along two axes, with individuals displayed on one axis 701 and timestamps or a timeline displayed on another axis 703. For each individual, their name and department 711, a risk assessment 713, and whether the individual is bookmarked 717 or not 715 can be displayed at one end of the 703 axis. Over the rest of the 703 axis, and next to each individual, one or more sets of aggregated data can be displayed, for instance as one or more rectangular shapes can be displayed, indicating a period of time during which each individual was in possession of sensitive data corresponding to the search request. Each rectangular shape can include aggregated data relative to detected sensitive data, including for instance the number of sensitive data and/or of files containing sensitive data possessed by the individual 719, and/or the duration of time over which the individual possessed such sensitive data 721. As can be appreciated, by displaying the results in this manner, an analyst can more easily visualize which individuals were in possession of specified sensitive data at a given moment in time, and identify moments in time where data may have been shared among said individuals.

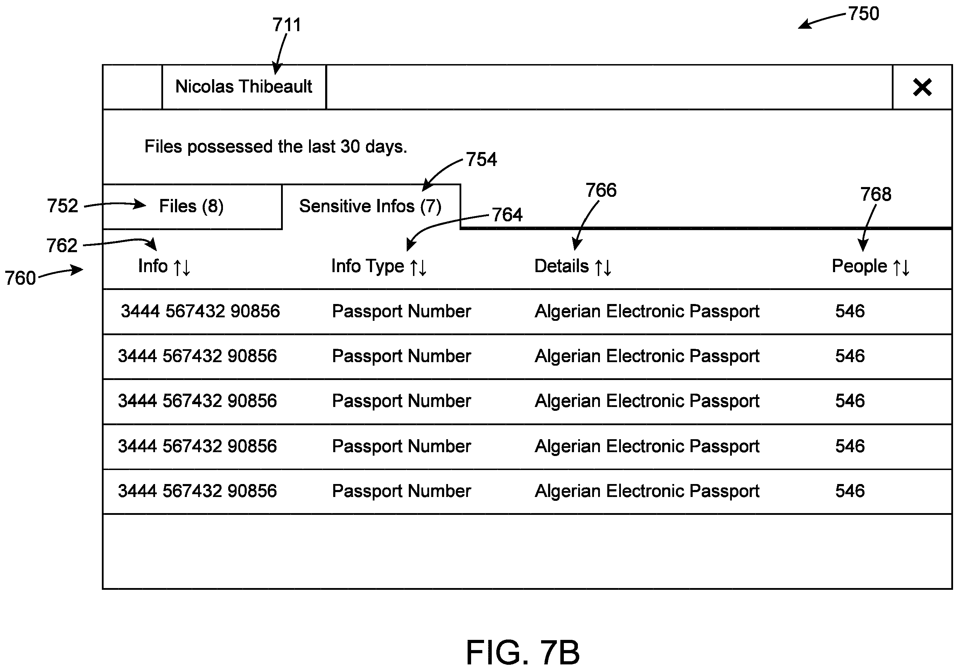

With reference to Figure 7B, an exemplary window 750 displaying details about sensitive data 111 detected on the device or devices 101 of a given individual 711 is shown according to an embodiment. Window 750 can for instance be a pop-up window that is opened when an analyst activates the name and department of an individual 711 in window 700 by a data entry device 313 or a pointing device 315. Window 750 can for instance be organized as two tabs 752, 754, one of which can be activated by an analyst at any given time. A first tab 752, when activated, can be used to display information about files containing sensitive data 111 on the device(s) of the individual 711. A second tab 754, when activated, can be used to display information about sensitive data detected in data assets of the device(s) of the individual 711. Figure 7B shows the exemplary window 750 with the second tab 754 activated. Activating either tab can cause, e.g., a table to be displayed in window 750, containing a number of characteristics 760 of the detected sensitive data or files containing sensitive data. As an example only, in second tab 754, these characteristics can include each detected sensitive datum 762, which can for instance be displayed as a hash and/or, through customer decryption module 119, as an interpretable value, an information type 764 and a detailed information type 766 of each sensitive datum obtained as part of the enhanced match information gathered by properties gathering module 231, and a number of people 768 having access to each sensitive datum.

As can be appreciated, the above-described systems and methods can provide several advantages that allow for a convenient yet secure visualization of the propagation of sensitive data across individuals in an organization.

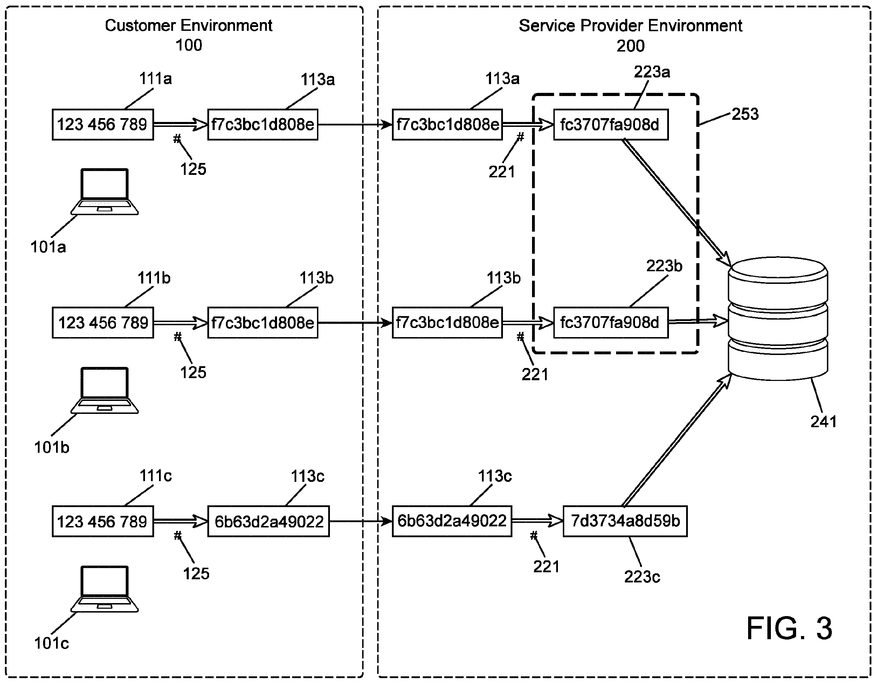

As an example, through the use of fingerprinting and double hashing, searches for sensitive data can be conducted in the service provider environment without actually providing access to the sensitive data itself within the service provider environment. By way of illustration, Figure 3 shows an example of three detection events occurring over three different devices 101a, 101b and 101c in the same customer environment 100. Sensitive data 111a is detected to be accessible via device 101a, sensitive data 111b is detected to be accessible via device 101b and sensitive data 111c is detected to be accessible via device 101c. It can be appreciated that sensitive data 111a and 111b are identical, whereas sensitive data 111c is similar but slightly different. After being salted and hashed by hashing module, it can be appreciated that the hashed sensitive data 113a and 113b are identical, whereas the hashed sensitive data 113c is substantially different. Hashes 113a, 113b and 113c are then transmitted to the service provider environment 200, where hashing module 221 salts and hashes them a second time then storage module 241 commits them to persistent storage. It can be appreciated that the double-hashes 223a and 223b are still identical, whereas the double-hash 223c is substantially different. Therefore, if searching module 251 is triggered by a query to retrieve sensitive data 111 that is detected on more than one device, the search result 253 will show that devices 101a and 101b share a common piece of sensitive data 111a and 111b, despite the service provider environment 200 not being able to determine the nature of the sensitive data 111a, 111b and 111c, or that sensitive data 111a and 111b are similar to sensitive data 111c.

As a further example, the use of hashing has the result that sensitive data is never available outside the customer environment, even to someone with full access to the service provider environment. Because of the irreversibility of a cryptographic hash function, the only tractable option to discover the original value corresponding to a hashed value is to use a rainbow table attack. A rainbow table is a data structure, for instance a table comprising two columns, in which the first column is pre-filled with possible original values and the second column is pre-filled with the hashed value that is the result of a cryptographic hash function being applied to the corresponding original value in the first column. Creating a rainbow is long and computationally intensive but, once the table is created, it is possible to look up a hashed value in the second column and know the corresponding original value in the first column in tractable time. As can be appreciated, utilizing customer-side salt helps to protect against a rainbow table attack. Even if the salt is known to an attacker, it adds an extra layer of security because a new rainbow table has to be computed. If the salt is unknown to the attacker, the rainbow table attack cannot be performed, and there exists no tractable way to determine the original value that corresponds to a hash value. Salting and hashing the sensitive data twice, for example by hashing a second time using server-side salt, has the result that the sensitive data cannot be determined through a rainbow table attack even if the customer-side salt is leaked and an attacker gains access to the service provider environment storage.

Although particular embodiments and advantages have been described above, it is appreciated that these are for illustrative purposes only. Additional embodiments and advantages may become apparent to a person of skill in the art upon reading the foregoing specification. Moreover, a person of skill in the art will appreciate that various modifications and changes can be made without departing from the scope of the invention. Accordingly, the specification and figures are to be regarded in an illustrative rather than a restrictive sense, and all such modifications are intended to be included within the scope of present teachings.

## Claims

1. A method for tracking propagation of sensitive data, the method comprises:
- detecting, via a plurality of sensors (120) deployed to a plurality of devices (101), sensitive data (111) within data assets (110) accessible via the plurality of devices (101), wherein detecting the sensitive data within the data assets comprises identifying data assets containing data matching one or more predefined patterns or structures;
- gathering, via the plurality of sensors (120), file metadata comprising a timestamp and an identifier, and gathering host metadata corresponding to a device of the plurality of devices from which sensitive data was detected and/or match metadata:
- extracting, via the plurality of sensors (120), the sensitive data (111) from the data assets (110), and hashing the sensitive data using a first salt (113) to produce first hashes;
- transmitting data detection event information comprising at least the first hashes and the gathered file metadata, the host metadata and/or the match metadata from the plurality of sensors (120) to a backend server;
- receiving the data detection event information at the backend server;
- hashing the first hashes at the backend server using a second salt (293) to produce second hashes; and
- storing the second hashes in storage (241) accessible via the backend server for later access, each of the second hashes being stored as a detection event in association with properties comprising at least: the timestamp corresponding to when the sensitive data was detected, and the identifier being the identifier of the file from which the sensitive data was detected and extracted.

2. The method according claim 1, wherein the data detection event information is encrypted, using a public key of a first asymmetric key pair comprising a private key and the public key, before being transmitted to the backend server.

3. The method according to any one of the preceding claims, comprising, after receiving the first hashes at the backend server:
- gathering, via the backend server, server-level properties comprising: enhanced match information associated with extracted sensitive data and the data asset from which the sensitive data was extracted; and/or
- a risk profile corresponding to a level of risk associated with the detection event; and
- storing the server-level properties in association with the detection events in the storage.

4. The method according to any one of the preceding claims, wherein the tracking is implemented for a plurality of customers, each of the plurality of sensors being associated with one customer of the plurality of customers, wherein hashing the sensitive data further comprises obtaining a first salt specific to the one customer.

5. The method according to any one of the preceding claims, wherein the first salt is stored in a customer key vault (130) accessible by the plurality of sensors (120), wherein hashing the sensitive data to produce first hashes further comprises obtaining the first salt (113) from the customer key vault (130).

6. The method according to any one of the preceding claims, wherein the second salt is stored in a service-provider key vault (290) accessible via the backend server, wherein hashing the first hashes at the backend server further comprises querying the service-provider key vault (290) to obtain the second salt (293).

7. The method according to any one of the preceding claims, comprising receiving, at the backend server, a search request corresponding to a specific sensitive data value, and in response thereto:
- responsive to the search request not comprising a first search hash, hashing the specific sensitive data value using the first salt (113) to produce the first search hash;
- hashing the first search hash using the second salt (293) to produce a second search hash; and
- searching for second hashes in the storage matching the second search hash.

8. The method according to any one of the preceding claims, comprising causing a display device to display, for a specified type of sensitive data, a plurality of elements, wherein each element comprises:
- one sensitive data (111) of the specified type that was detected within at least one data asset accessible via at least one of the plurality of devices; and
- a number of distinct devices and/or individuals (603) having access to at least one of the data assets where the sensitive data was detected, and/or a number of distinct files where the sensitive data was detected.

9. The method according to claim 8, comprising causing the display device to display:
- on a first axis (701), a plurality of individuals;
- on a second axis (703), a plurality of timestamps; and
- at least one set of aggregated information relative to detection events, each displayed on the second axis (703) next to the individual who triggered the detection event and on the first axis (701) next to the one or more timestamps representing the moments when the detection events occurred.

10. The method according to claim 9, wherein displaying each set of aggregated information comprises displaying:
- a number of sensitive data (719) that was detected within data assets accessible via a device (101) corresponding to the individual who triggered the detection event;
- a number of files (719) in which the sensitive data was detected within data assets accessible via a device (101) corresponding to the individual who triggered the detection event; and/or
- a duration (721) for which the sensitive data was detected within data assets accessible via a device (101) corresponding to the individual who triggered the detection event.

11. The method according to any one of claims 8 to 10, comprising causing the display device to display, for a specified individual (711):
- a list of the sensitive data (754) that was detected within data assets accessible via a device (101) corresponding to the specified individual (711); and/or
- a list of files (752) in which the sensitive data was detected within data assets accessible via a device (101) corresponding to the specified individual (711).

12. The method according to any one of claims 9 to 11, comprising encrypting the sensitive data using a public key of a second asymmetric key pair comprising a private key and the public key, to produce cryptograms, the detection event information further comprising the cryptograms.

13. The method according to claim 12, comprising:
- transmitting, via a consultation device, cryptograms received from the backend server to a customer decryption module;
- decrypting, via the customer decryption module, cryptograms received from the consultation device using the private key of the second asymmetric key pair;
- transmitting the decrypted cryptograms from the customer decryption module to the consultation device; and
- displaying the decrypted cryptograms via the consultation device.

14. A system (1) for tracking propagation of sensitive data, the system comprising:
a plurality of endpoint devices (101);
a backend server; and
a storage module (241);
each endpoint device has a sensor (120) deployed thereto, the sensor being preconfigured with a first salt (113), the sensor comprising:
- a surveillance module (121) configured to detect and extract sensitive data from data assets accessible via the endpoint device and to gather file metadata comprising a timestamp and an identifier, and to gather host metadata corresponding to a device of the plurality of devices from which sensitive data was detected and/or match metadata, wherein detecting the sensitive data within the data assets comprises identifying data assets containing data matching one or more predefined patterns or structures;
- a hashing module (125) configured to hash the extracted sensitive data using the first salt (113) to produce first hashes; and
- a communication module (129) configured to transmit detection event information, each instance of detection event information corresponding to an instance of sensitive data being detected and comprising at least a first hash computed from said instance of sensitive data and the gathered file metadata, the host metadata and/or the match metadata: the backend server comprises:
- a communication module (201) configured to receive the detection event information from the plurality of endpoint devices; and
- a hashing module (221) configured to hash the first hashes using a second salt (293) to produce second hashes; and
the storage module (241) is configured to store each of the second hashes as a detection event in association with properties comprising at least: the timestamp corresponding to when the sensitive data was detected, and the identifier being the identifier of the file from which the sensitive data was detected and extracted, in storage accessible via the backend server for later access.

## Patentansprüche

1. Ein Verfahren zum Verfolgen der Verbreitung von sensiblen Daten, wobei das Verfahren Folgendes beinhaltet:
- Detektieren, über eine Vielzahl von Sensoren (120), die an einer Vielzahl von Vorrichtungen (101) eingesetzt werden, von sensiblen Daten (111) innerhalb von Datenbeständen (110), auf die über die Vielzahl von Vorrichtungen (101) zugegriffen werden kann, wobei das Detektieren der sensiblen Daten innerhalb der Datenbestände das Identifizieren von Datenbeständen beinhaltet, die Daten enthalten, die mit einem/einer oder mehreren vordefinierten Mustern oder Strukturen übereinstimmen;
- Sammeln, über die Vielzahl von Sensoren (120), von Dateimetadaten, die einen Zeitstempel und eine Kennung beinhalten, und Sammeln von Host-Metadaten, die einer Vorrichtung der Vielzahl von Vorrichtungen entsprechen, von der sensible Daten detektiert wurden, und/oder Übereinstimmungsmetadaten;
- Extrahieren, über die Vielzahl von Sensoren (120), der sensiblen Daten (111) aus den Datenbeständen (110) und Berechnen von Hashwerten für die sensiblen Daten unter Verwendung eines ersten Salts (113), um erste Hashwerte zu produzieren;
- Übertragen von Datendetektionsereignisinformationen, die mindestens die ersten Hashwerte und die gesammelten Dateimetadaten, die Host-Metadaten und/oder die Übereinstimmungsmetadaten beinhalten, von der Vielzahl von Sensoren (120) an einen Backend-Server;
- Empfangen der Datendetektionsereignisinformationen an dem Backend-Server;
- Berechnen von Hashwerten für die ersten Hashwerte an dem Backend-Server unter Verwendung eines zweiten Salts (293), um zweite Hashwerte zu produzieren; und
- Speichern der zweiten Hashwerte für späteren Zugriff in einer Speichereinrichtung (241), auf die über den Backend-Server zugegriffen werden kann, wobei jeder der zweiten Hashwerte als ein Detektionsereignis in Verknüpfung mit Eigenschaften gespeichert wird, die mindestens Folgendes beinhalten: den Zeitstempel, der dem Zeitpunkt entspricht, zu dem die sensiblen Daten detektiert wurden, und die Kennung, die die Kennung der Datei ist, aus der die sensiblen Daten detektiert und extrahiert wurden.

2. Verfahren gemäß Anspruch 1, wobei die Datendetektionsereignisinformationen unter Verwendung eines öffentlichen Schlüssels eines ersten asymmetrischen Schlüsselpaars, das einen privaten Schlüssel und den öffentlichen Schlüssel beinhaltet, verschlüsselt werden, bevor sie an den Backend-Server übertragen werden.

3. Verfahren gemäß einem der vorhergehenden Ansprüche, das nach dem Empfangen der ersten Hashwerte an dem Backend-Server Folgendes beinhaltet:
- Sammeln, über den Backend-Server, von Serverebenen-Eigenschaften, die Folgendes beinhalten: verbesserte Übereinstimmungsinformationen, die mit extrahierten sensiblen Daten und dem Datenbestand, aus dem die sensiblen Daten extrahiert wurden, verknüpft sind; und/oder
- ein Risikoprofil, das einem mit dem Detektionsereignis verknüpften Risikoniveau entspricht; und
- Speichern der Serverebenen-Eigenschaften in Verknüpfung mit den Detektionsereignissen in der Speichereinrichtung.

4. Verfahren gemäß einem der vorhergehenden Ansprüche, wobei das Verfolgen für eine Vielzahl von Kunden implementiert wird, wobei jeder der Vielzahl von Sensoren mit einem Kunden der Vielzahl von Kunden verknüpft ist, wobei das Berechnen von Hashwerten für die sensiblen Daten ferner das Erhalten eines für den einen Kunden spezifischen ersten Salts beinhaltet.

5. Verfahren gemäß einem der vorhergehenden Ansprüche, wobei das erste Salt in einem Kundenschlüsseltresor (130) gespeichert ist, auf den die Vielzahl von Sensoren (120) zugreifen kann, wobei das Berechnen von Hashwerten für die sensiblen Daten, um erste Hashwerte zu produzieren, ferner das Erhalten des ersten Salts (113) aus dem Kundenschlüsseltresor (130) beinhaltet.

6. Verfahren gemäß einem der vorhergehenden Ansprüche, wobei das zweite Salt in einem Dienstanbieterschlüsseltresor (290) gespeichert ist, auf den über den Backend-Server zugegriffen werden kann, wobei das Berechnen von Hashwerten für die ersten Hashwerte an dem Backend-Server ferner das Abfragen des Dienstanbieterschlüsseltresors (290) beinhaltet, um das zweite Salt (293) zu erhalten.

7. Verfahren gemäß einem der vorhergehenden Ansprüche, das das Empfangen, an dem Backend-Server, einer Suchanforderung beinhaltet, die einem spezifischen sensiblen Datenwert entspricht, und als Reaktion darauf:
- reagierend darauf, dass die Suchanforderung keinen ersten Suchhashwert beinhaltet, Berechnen eines Hashwerts für den spezifischen sensiblen Datenwert unter Verwendung des ersten Salts (113), um den ersten Suchhashwert zu produzieren;
- Berechnen eines Hashwerts für den ersten Suchhashwert unter Verwendung des zweiten Salts (293), um einen zweiten Suchhashwert zu produzieren; und
- Suchen nach zweiten Hashwerten in der Speichereinrichtung, die mit dem zweiten Suchhashwert übereinstimmen.

8. Verfahren gemäß einem der vorhergehenden Ansprüche, das das Bewirken beinhaltet, dass eine Anzeigevorrichtung für einen spezifizierten Typ von sensiblen Daten eine Vielzahl von Elementen anzeigt, wobei jedes Element Folgendes beinhaltet:
- einen sensiblen Datenpunkt (111) des spezifizierten Typs, der innerhalb mindestens eines Datenbestands detektiert wurde, auf den über mindestens eine der Vielzahl von Vorrichtungen zugegriffen werden kann; und
- eine Anzahl von unterschiedlichen Vorrichtungen und/oder Individuen (603), die Zugriff auf mindestens einen der Datenbestände haben, in dem die sensiblen Daten detektiert wurden, und/oder eine Anzahl von unterschiedlichen Dateien, in denen die sensiblen Daten detektiert wurden.

9. Verfahren gemäß Anspruch 8, das das Bewirken beinhaltet, dass die Anzeigevorrichtung Folgendes anzeigt:
- auf einer ersten Achse (701) eine Vielzahl von Individuen;
- auf einer zweiten Achse (703) eine Vielzahl von Zeitstempeln; und
- mindestens einen Satz von aggregierten Informationen in Bezug auf Detektionsereignisse, die jeweils auf der zweiten Achse (703) neben dem Individuum, das das Detektionsereignis ausgelöst hat, und auf der ersten Achse (701) neben dem einen oder den mehreren Zeitstempeln, die die Momente darstellen, zu denen die Detektionsereignisse aufgetreten sind, angezeigt werden.

10. Verfahren gemäß Anspruch 9, wobei das Anzeigen jedes Satzes von aggregierten Informationen das Anzeigen von Folgendem beinhaltet:
- einer Anzahl von sensiblen Daten (719), die innerhalb von Datenbeständen detektiert wurden, auf die über eine Vorrichtung (101) zugegriffen werden kann, die dem Individuum entspricht, das das Detektionsereignis ausgelöst hat;
- einer Anzahl von Dateien (719), in denen die sensiblen Daten innerhalb von Datenbeständen detektiert wurden, auf die über eine Vorrichtung (101) zugegriffen werden kann, die dem Individuum entspricht, das das Detektionsereignis ausgelöst hat; und/oder
- einer Dauer (721), für die die sensiblen Daten innerhalb von Datenbeständen detektiert wurden, auf die über eine Vorrichtung (101) zugegriffen werden kann, die dem Individuum entspricht, das das Detektionsereignis ausgelöst hat.

11. Verfahren gemäß einem der Ansprüche 8 bis 10, das das Bewirken beinhaltet, dass die Anzeigevorrichtung für ein spezifiziertes Individuum (711) Folgendes anzeigt:
- eine Liste der sensiblen Daten (754), die innerhalb von Datenbeständen detektiert wurden, auf die über eine Vorrichtung (101) zugegriffen werden kann, die dem spezifizierten Individuum (711) entspricht; und/oder
- eine Liste von Dateien (752), in denen die sensiblen Daten innerhalb von Datenbeständen detektiert wurden, auf die über eine Vorrichtung (101) zugegriffen werden kann, die dem spezifizierten Individuum (711) entspricht.

12. Verfahren gemäß einem der Ansprüche 9 bis 11, das das Verschlüsseln der sensiblen Daten unter Verwendung eines öffentlichen Schlüssels eines zweiten asymmetrischen Schlüsselpaars, das einen privaten Schlüssel und den öffentlichen Schlüssel beinhaltet, beinhaltet, um Kryptogramme zu produzieren, wobei die Detektionsereignisinformationen ferner die Kryptogramme beinhalten.

13. Verfahren gemäß Anspruch 12, das Folgendes beinhaltet:
- Übertragen, über eine Konsultierungsvorrichtung, von Kryptogrammen, die von dem Backend-Server empfangen werden, an ein Kundenentschlüsselungsmodul;
- Entschlüsseln, über das Kundenentschlüsselungsmodul, von Kryptogrammen, die von der Konsultierungsvorrichtung empfangen werden, unter Verwendung des privaten Schlüssels des zweiten asymmetrischen Schlüsselpaars;
- Übertragen der entschlüsselten Kryptogramme von dem Kundenentschlüsselungsmodul an die Konsultierungsvorrichtung; und
- Anzeigen der entschlüsselten Kryptogramme über die Konsultierungsvorrichtung.

14. Ein System (1) zum Verfolgen der Verbreitung von sensiblen Daten, wobei das System Folgendes beinhaltet:
eine Vielzahl von Endpunktvorrichtungen (101);
einen Backend-Server; und
ein Speichermodul (241);
wobei jede Endpunktvorrichtung einen daran eingesetzten Sensor (120) aufweist,
wobei der Sensor mit einem ersten Salt (113) vorkonfiguriert ist, wobei der Sensor Folgendes beinhaltet:
- ein Überwachungsmodul (121), das konfiguriert ist, um aus Datenbeständen, auf die über die Endpunktvorrichtung zugegriffen werden kann, sensible Daten zu detektieren und zu extrahieren und um Dateimetadaten, die einen Zeitstempel und eine Kennung beinhalten, zu sammeln und um Host-Metadaten, die einer Vorrichtung der Vielzahl von Vorrichtungen entsprechen, von der sensible Daten detektiert wurden, und/oder Übereinstimmungsmetadaten zu sammeln, wobei das Detektieren der sensiblen Daten innerhalb der Datenbestände das Identifizieren von Datenbeständen beinhaltet, die Daten enthalten, die mit einem/einer oder mehreren vordefinierten Mustern oder Strukturen übereinstimmen;
- ein Hashwertberechnungsmodul (125), das konfiguriert ist, um für die extrahierten sensiblen Daten unter Verwendung des ersten Salts (113) Hashwerte zu berechnen, um erste Hashwerte zu produzieren; und
- ein Kommunikationsmodul (129), das konfiguriert ist, um Detektionsereignisinformationen zu übertragen, wobei jede Instanz von Detektionsereignisinformationen einer Instanz von sensiblen Daten entspricht, die detektiert werden, und mindestens einen ersten Hashwert, der aus der Instanz von sensiblen Daten errechnet wird, und die gesammelten Dateimetadaten, die Host-Metadaten und/oder die Übereinstimmungsmetadaten beinhaltet;
wobei der Backend-Server Folgendes beinhaltet:
- ein Kommunikationsmodul (201), das konfiguriert ist, um die Detektionsereignisinformationen von der Vielzahl von Endpunktvorrichtungen zu empfangen; und
- ein Hashwertberechnungsmodul (221), das konfiguriert ist, um für die ersten Hashwerte unter Verwendung eines zweiten Salts (293) Hashwerte zu berechnen, um zweite Hashwerte zu produzieren; und
wobei das Speichermodul (241) konfiguriert ist, um in einer Speichereinrichtung, auf die über den Backend-Server zugegriffen werden kann, jeden der zweiten Hashwerte für späteren Zugriff als ein Detektionsereignis in Verknüpfung mit Eigenschaften zu speichern, die mindestens Folgendes beinhalten: den Zeitstempel, der dem Zeitpunkt entspricht, zu dem die sensiblen Daten detektiert wurden, und die Kennung, die die Kennung der Datei ist, aus der die sensiblen Daten detektiert und extrahiert wurden.

## Revendications

1. Un procédé pour le suivi de propagation de données sensibles, le procédé comprenant :
- la détection, par l'intermédiaire d'une pluralité de capteurs (120) déployés sur une pluralité de dispositifs (101), de données sensibles (111) au sein d'actifs de données (110) accessibles par l'intermédiaire de la pluralité de dispositifs (101), la détection des données sensibles au sein des actifs de données comprenant l'identification d'actifs de données contenant des données concordant avec un ou plusieurs motifs ou une ou plusieurs structures prédéfini(e)s ;
- la collecte, par l'intermédiaire de la pluralité de capteurs (120), de métadonnées de fichier comprenant une estampille temporelle et un identifiant, et la collecte de métadonnées d'hôte correspondant à un dispositif de la pluralité de dispositifs à partir duquel des données sensibles ont été détectées et/ou de métadonnées de concordance ;
- l'extraction, par l'intermédiaire de la pluralité de capteurs (120), des données sensibles (111) à partir des actifs de données (110), et le hachage des données sensibles à l'aide d'un premier sel (113) pour produire des premières valeurs de hachage ;
- la transmission d'informations d'événement de détection de données comprenant au moins les premières valeurs de hachage et les métadonnées de fichier collectées, les métadonnées d'hôte et/ou les métadonnées de concordance de la pluralité de capteurs (120) à un serveur dorsal ;
- la réception des informations d'événement de détection de données au niveau du serveur dorsal ;
- le hachage des premières valeurs de hachage au niveau du serveur dorsal à l'aide d'un deuxième sel (293) pour produire des deuxièmes valeurs de hachage ; et
- le stockage des deuxièmes valeurs de hachage dans une unité de stockage (241) accessible par l'intermédiaire du serveur dorsal pour un accès ultérieur, chacune des deuxièmes valeurs de hachage étant stockée comme événement de détection en association avec des propriétés comprenant au moins : l'estampille temporelle correspondant au moment où les données sensibles ont été détectées, et l'identifiant étant l'identifiant du fichier à partir duquel les données sensibles ont été détectées et extraites.

2. Le procédé selon la revendication 1, dans lequel les informations d'événement de détection de données sont chiffrées, à l'aide d'une clé publique d'une première paire de clés asymétrique comprenant une clé privée et la clé publique, avant d'être transmises au serveur dorsal.

3. Le procédé selon l'une quelconque des revendications précédentes, comprenant, après la réception des premières valeurs de hachage au niveau du serveur dorsal :
- la collecte, par l'intermédiaire du serveur dorsal, de propriétés de niveau serveur comprenant : des informations de concordance améliorée associées à des données sensibles extraites et à l'actif de données à partir duquel les données sensibles ont été extraites ; et/ou
- un profil de risque correspondant à un niveau de risque associé à l'événement de détection ; et
- le stockage des propriétés de niveau serveur en association avec les événements de détection dans l'unité de stockage.

4. Le procédé selon l'une quelconque des revendications précédentes, dans lequel le suivi est mis en œuvre pour une pluralité de clients, chaque capteur de la pluralité de capteurs étant associé à un client de la pluralité de clients, le hachage des données sensibles comprenant en outre l'obtention d'un premier sel spécifique au client.

5. Le procédé selon l'une quelconque des revendications précédentes, dans lequel le premier sel est stocké dans un coffre à clés de client (130) accessible par la pluralité de capteurs (120), le hachage des données sensibles pour produire des premières valeurs de hachage comprenant en outre l'obtention du premier sel (113) à partir du coffre à clés de client (130).

6. Le procédé selon l'une quelconque des revendications précédentes, dans lequel le deuxième sel est stocké dans un coffre à clés de fournisseur de services (290) accessible par l'intermédiaire du serveur dorsal, le hachage des premières valeurs de hachage au niveau du serveur dorsal comprenant en outre la demande au coffre à clés de fournisseur de services (290) pour l'obtention du deuxième sel (293).

7. Le procédé selon l'une quelconque des revendications précédentes, comprenant la réception, au niveau du serveur dorsal, d'une requête de recherche correspondant à une valeur de données sensibles spécifique, et en réponse à celle-ci :
- en réponse au fait que la requête de recherche ne comprend pas de première valeur de hachage de recherche, le hachage de la valeur de données sensibles spécifique à l'aide du premier sel (113) pour produire la première valeur de hachage de recherche ;
- le hachage de la première valeur de hachage de recherche à l'aide du deuxième sel (293) pour produire une deuxième valeur de hachage de recherche ; et
- la recherche de deuxièmes valeurs de hachage dans l'unité de stockage concordant avec la deuxième valeur de hachage de recherche.

8. Le procédé selon l'une quelconque des revendications précédentes, comprenant le fait d'amener un dispositif d'affichage à afficher, pour un type spécifié de données sensibles, une pluralité d'éléments, chaque élément comprenant :
- une donnée sensible (111) du type spécifié qui a été détectée au sein d'au moins un actif de données accessible par l'intermédiaire d'au moins un dispositif de la pluralité de dispositifs ; et
- un nombre de dispositifs et/ou d'individus distincts (603) ayant accès à au moins un des actifs de données où la donnée sensible a été détectée, et/ou un nombre de fichiers distincts où la donnée sensible a été détectée.

9. Le procédé selon la revendication 8, comprenant le fait d'amener le dispositif d'affichage à afficher :
- sur un premier axe (701), une pluralité d'individus ;
- sur un deuxième axe (703), une pluralité d'estampilles temporelles ; et
- au moins un ensemble d'informations agrégées relatives à des événements de détection, chacune étant affichée sur le deuxième axe (703) à côté de l'individu qui a déclenché l'événement de détection et sur le premier axe (701) à côté des une ou plusieurs estampilles temporelles représentant les moments où les événements de détection se sont produits.

10. Le procédé selon la revendication 9, dans lequel l'affichage de chaque ensemble d'informations agrégées comprend l'affichage :
- d'un nombre de données sensibles (719) qui ont été détectées au sein d'actifs de données accessibles par l'intermédiaire d'un dispositif (101) correspondant à l'individu qui a déclenché l'événement de détection ;
- d'un nombre de fichiers (719) dans lesquels les données sensibles ont été détectées au sein d'actifs de données accessibles par l'intermédiaire d'un dispositif (101) correspondant à l'individu qui a déclenché l'événement de détection ; et/ou
- d'une durée (721) pendant laquelle les données sensibles ont été détectées au sein d'actifs de données accessibles par l'intermédiaire d'un dispositif (101) correspondant à l'individu qui a déclenché l'événement de détection.

11. Le procédé selon l'une quelconque des revendications 8 à 10, comprenant le fait d'amener le dispositif d'affichage à afficher, pour un individu spécifié (711) :
- une liste des données sensibles (754) qui ont été détectées au sein d'actifs de données accessibles par l'intermédiaire d'un dispositif (101) correspondant à l'individu spécifié (711) ; et/ou
- une liste de fichiers (752) dans lesquels les données sensibles ont été détectées au sein d'actifs de données accessibles par l'intermédiaire d'un dispositif (101) correspondant à l'individu spécifié (711).

12. Le procédé selon l'une quelconque des revendications 9 à 11, comprenant le chiffrement des données sensibles à l'aide d'une clé publique d'une deuxième paire de clés asymétrique comprenant une clé privée et la clé publique, pour produire des cryptogrammes, les informations d'événement de détection comprenant en outre les cryptogrammes.

13. Le procédé selon la revendication 12, comprenant :
- la transmission, par l'intermédiaire d'un dispositif de consultation, de cryptogrammes reçus en provenance du serveur dorsal à un module de déchiffrement de client ;
- le déchiffrement, par l'intermédiaire du module de déchiffrement de client, de cryptogrammes reçus en provenance du dispositif de consultation à l'aide de la clé privée de la deuxième paire de clés asymétrique ;
- la transmission des cryptogrammes déchiffrés du module de déchiffrement de client au dispositif de consultation ; et
- l'affichage des cryptogrammes déchiffrés par l'intermédiaire du dispositif de consultation.

14. Un système (1) pour le suivi de propagation de données sensibles, le système comprenant :
une pluralité de dispositifs terminaux (101) ;
un serveur dorsal ; et
un module de stockage (241) ;
chaque dispositif terminal a un capteur (120) déployé sur celui-ci, le capteur étant préconfiguré avec un premier sel (113), le capteur comprenant :
- un module de surveillance (121) configuré pour détecter et extraire des données sensibles à partir d'actifs de données accessibles par l'intermédiaire du dispositif terminal et pour collecter des métadonnées de fichier comprenant une estampille temporelle et un identifiant, et pour collecter des métadonnées d'hôte correspondant à un dispositif de la pluralité de dispositifs à partir duquel des données sensibles ont été détectées et/ou des métadonnées de concordance, la détection des données sensibles au sein des actifs de données comprenant l'identification d'actifs de données contenant des données concordant avec un ou plusieurs motifs ou une ou plusieurs structures prédéfini(e)s ;
- un module de hachage (125) configuré pour hacher les données sensibles extraites à l'aide du premier sel (113) pour produire des premières valeurs de hachage ; et
- un module de communication (129) configuré pour transmettre des informations d'événement de détection, chaque instance d'informations d'événement de détection correspondant à une instance de données sensibles qui sont détectées et comprenant au moins une première valeur de hachage calculée à partir de ladite instance de données sensibles et des métadonnées de fichier collectées, des métadonnées d'hôte et/ou des métadonnées de concordance ;
le serveur dorsal comprend :
- un module de communication (201) configuré pour recevoir les informations d'événement de détection en provenance de la pluralité de dispositifs terminaux ; et
- un module de hachage (221) configuré pour hacher les premières valeurs de hachage à l'aide d'un deuxième sel (293) pour produire des deuxièmes valeurs de hachage ; et
le module de stockage (241) est configuré pour stocker chacune des deuxièmes valeurs de hachage comme événement de détection en association avec des propriétés comprenant au moins : l'estampille temporelle correspondant au moment où les données sensibles ont été détectées, et l'identifiant étant l'identifiant du fichier à partir duquel les données sensibles ont été détectées et extraites, dans une unité de stockage accessible par l'intermédiaire du serveur dorsal pour un accès ultérieur.
